# EUROPEAN PATENT SPECIFICATION

(11) **EP 4 199 375 B1**
(45) Date of publication and mention of the grant of the patent: **25.03.2026**
(21) Application number: 21863613.2
(22) Date of filing: 31.08.2021
(51) Int. Cl.: H04B 10/032, H04B 10/038, H04B 10/2575, H04J 14/02

(54) **COMMUNICATION SYSTEM, RELATED DEVICE, AND METHOD**
KOMMUNIKATIONSSYSTEM, ZUGEHÖRIGE VORRICHTUNG UND VERFAHREN
SYSTÈME DE COMMUNICATION, DISPOSITIF ASSOCIÉ ET PROCÉDÉ

(30) Priority: 04.09.2020 CN 202010931724
(43) Date of publication of application: 21.06.2023
(73) Proprietor: Huawei Technologies Co., Ltd., Shenzhen, Guangdong 518129 (CN)
(72) Inventor: YANG, Dengfeng, Shenzhen, Guangdong 518129 (CN)
(74) Representative: Epping - Hermann - Fischer
(86) International application number: PCT/CN2021/115831
(87) International publication number: WO 2022/048549

(56) References cited:
- CN-A- 1 661 941
- CN-A- 103 650 387
- CN-A- 104 955 089
- CN-A- 104 955 089
- CN-A- 106 454 907
- US-A1- 2009 170 543
- US-A1- 2017 237 495
- US-A1- 2020 204 284

## Description

### TECHNICAL FIELD

This application relates to the communication field, and in particular to a communication system, and a central office device.

### BACKGROUND

In current mainstream forms of radio base stations, a distributed base station is a mainstream, and a remote radio head (RRH) and a baseband unit (BBU) are deployed mainly in a remote radio manner. An interface between a BBU and an RRH is referred to as a fronthaul interface. The fronthaul interface bears traffic from the RRH to the BBU. There are a plurality of mainstream manners of bearing fronthaul traffic, for example, using a common public radio interface (CPRI), an enhanced common public radio interface (eCPRI), radio over fiber (ROF), or the like, each of which controls traffic by adjusting a function deployment. In addition, fronthaul traffic varies greatly with different quantities of TRXs. A variation of traffic between a BBU and an RRH is a most important factor that affects, in the future, a variation of an architecture.

From 2G and 3G to 4G, 5G, and subsequent 6G, each generation of communication technologies have increasingly high requirements for baseband computing capabilities, and requirements for inter-BBU transmission bandwidth and latency become higher. As fronthaul traffic increases sharply, future-oriented massive MIMO system may be limited by a current CPRI interface. A new splitting point or even an integrated base station is to be taken into consideration, or a low-cost optical technology is to be introduced. In addition, current electrical components have encountered a bottleneck in satisfying requirements of large bandwidth and computing in the future; and combination of a radio base station and an optical technology is a key direction for implementing huge space and capability improving flexibility in the future.

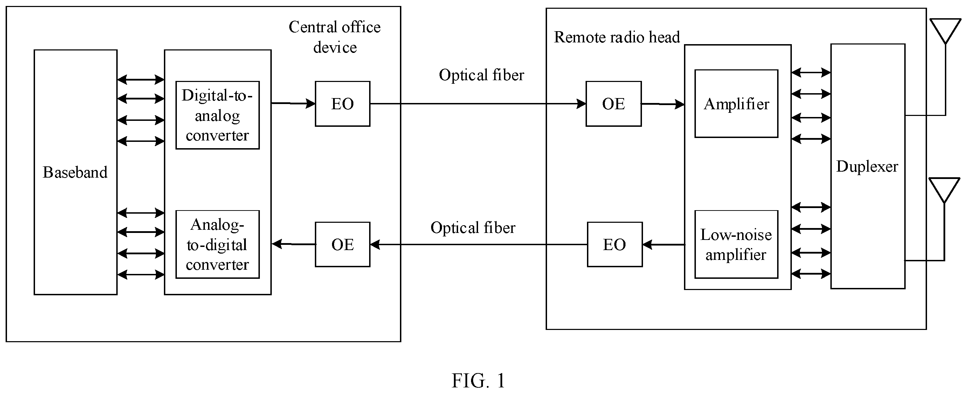

A ROF technology includes: modulating an RF carrier to an optical carrier; then performing transmission to a receiving end by using an optical fiber; performing photoelectric conversion by using a photoelectric detector at the receiving end to obtain a radio frequency signal; and finally transmitting the radio frequency signal to a user terminal by using an antenna. As shown in FIG. 1, a ROF base station includes two parts: a central office (CO) device and an RRH that are connected by using an optical fiber. A modulation module, an analog-to-digital converter (ADC), a digital-to-analog converter (DAC), and the like of a radio frequency module are integrated into the CO device.

However, a ROF base station implements only transmission of a wireless signal in an optical fiber. Portions of the ROF base station other than the transmission portion still use a manner of processing an electrical signal. A CO device uses key electrical components such as a DAC and an ADC, and still processes a key intermediate radio frequency portion by using a manner of processing an electrical component. This brings problems such as high costs, high power consumption, and limited bandwidth.

Document CN 104 955 089 A provides a wireless access network, a signal sending method and a signal receiving method. When any one RRU in multiple RRUs is failed, according to a BBU, for a downlink, the downlink optical signal of a modulated downlink signal is respectively sent to adjacent RRUs. All RRUs as failed RRU subordinate equipment between the failed RRU and the BBU when a ring is not failed to transmit a downlink optical signal along the direction opposite to direction of downlink optical signal transmission when the ring is not failed. For an uplink, all RRUs as failed RRU superior equipment between the failed RRU and the BBU when the ring is not failed to transmit an uplink optical signal along the direction opposite to direction of uplink optical signal transmission when the ring is not failed. A plurality of RRUs are used for transmitting the optical signal according to indication when the indication of the BBU is received. Otherwise, the optical signal is transmitted along the direction of transmitting the optical signal when a ring is not failed. The link protection is realized.

Document US 2017/0237495 A1 refers to a system for compensating for a latency difference in a fronthaul in ring topology, including a centralization node linked to a BBU group, a plurality of distribution nodes linked to a plurality of RRH groups, an optical bi-directional ring network connecting the central node and the distribution nodes and allows a WDM optical signal to be transmitted and received between the central node and the distribution nodes, and a FIFO buffer that stores an electrical signal. Each of the distribution nodes demultiplexes the WDM optical signal, converts each demultiplexed optical signal into an electrical signal, stores the electrical signal in the FIFO buffer, converts the electrical signal stored in the FIFO buffer into an optical signal, and adjusts a size of the FIFO buffer, thus compensating for a difference between latencies before and after an occurrence of a switchover in the optical bidirectional ring network.

### SUMMARY

Embodiments of this application provide a communication system, and a central office device. According to embodiments of this application, an all-optical communication system is implemented by using a layout of an optical component in an architecture and using an optical ring network topology; and the communication system has a self-healing protection function. The present invention is defined by the attached set of claims. Embodiments and aspects which are not covered by the invention should be considered as examples useful for understanding the invention. According to a first aspect, an embodiment of this application provides a communication system, including: a central office (CO) device and a plurality of remote radio heads (RRHs), where the plurality of RRHs constitute a ring network by using optical fibers, and the CO device is connected to the ring network by using at least two optical fibers. Optionally, the at least two optical fibers include a first optical fiber and a second optical fiber.

The CO device is configured to: generate N first optical carriers, where wavelengths of the N first optical carriers are different; modulate a baseband signal to the N first optical carriers, to obtain N second optical carriers; and transmit the N second optical carriers to the ring network by using the first optical fiber, so that the N second optical carriers are transmitted in the ring network in a first direction, where N is an integer greater than 0.

Any RRH of the plurality of RRHs is configured to: obtain a target optical carrier from received second optical carriers, transmit all the received second optical carriers except the target optical carrier back to the ring network, convert the target optical carrier into an electrical signal, and transmit the electrical signal as a downlink signal.

Optionally, that the plurality of RRHs constitute the ring network by using the optical fibers is specifically: The plurality of RRHs are connected end to end by using the optical fibers, to form a closed ring network.

The baseband signal is a signal that is sent from a signal source and that has not been modulated. Each of the N first optical carriers carries a radio frequency signal. The modulation module modulates the baseband signal to the N first optical carriers, to obtain the N second optical carriers. Specifically, the modulation module modulates the baseband signal to the radio frequency signal in each of the N first optical carriers, thereby obtaining the N second optical carriers.

Optionally, a wavelength of the target optical carrier of the RRH is the same as a wavelength of an optical carrier required by the RRH, or is obtained by the RRH from the received second optical carriers according to wavelength selection information.

Optionally, the first direction is a clockwise direction or a counterclockwise direction.

Function re-splitting of a distributed base station is implemented by using an architecture of this application. Compared with an existing architecture of a BBU and an RRH, a baseband signal processing function of the BBU and a baseband signal frequency mixing function of the RRH are performed on a CO device side for processing, and a few functions, such as sending a signal and receiving a signal, of the RRH are reserved, so that large bandwidth, low costs, and low power consumption are achieved. In addition, the CO device and the RRH are implemented based on optical components, which can eliminate dependence of a conventional base station on a high-performance electrical component.

The CO device is further configured to: when detecting that the first optical fiber becomes faulty, transmit the N second optical carriers to the ring network by using the second optical fiber.

When the first optical fiber becomes faulty, the second optical fiber is used as a candidate optical fiber to replace the first optical fiber, thereby implementing a fault self-healing function.

In a feasible embodiment, any two adjacent RRHs of the plurality of RRHs may be connected by using one optical fiber, or may be connected by using two optical fibers to implement bidirectional transmission of an uplink signal and a downlink signal. When the connection is implemented by using two optical fibers, interference between an uplink optical signal and a downlink optical signal can be avoided.

In a feasible embodiment, any RRH is further configured to: obtain a seed optical signal according to the target optical carrier, modulate a received uplink signal to the seed optical signal to obtain a third optical carrier, and transmit the third optical carrier to the CO device by using a processing module.

The seed optical signal is obtained based on the target optical carrier; and the uplink signal is modulated to the seed optical signal. Because a frequency of the seed optical signal is the same as that of the first optical carrier, frequency synchronization between an uplink optical carrier and a downlink optical carrier can be implemented by using a same light source.

The communication system further includes processing module. The processing module is connected to the CO device by using the first optical fiber and the second optical fiber.

The processing module is further configured to: when detecting that an optical fiber of the ring network becomes faulty, control the N second optical carriers to be transmitted in the ring network in the first direction and a second direction, where the second direction is the clockwise direction or the counterclockwise direction, and the first direction is different from the second direction.

Optionally, the processing module may be an optical coupler.

As the processing module is introduced, an optical carrier is transmitted in the ring network in the clockwise direction and the counterclockwise direction when the ring network becomes faulty. Therefore, all the RRHs in the ring network can receive the optical carrier, which assists in implementing a self-healing function.

According to a second aspect, an embodiment of this application provides a CO device, including: a microwave photon generation module, a modulation module, a multiplexing module, a first optical circulator, a first optical switch, a demultiplexing module, and a receiving array.

The microwave photon generation module is connected to the multiplexing module by using the modulation module. The multiplexing module is connected to a first port of the first optical circulator. A second port of the first optical circulator is connected to a first port of the first optical switch. A third port of the first optical circulator is connected to the receiving array by using the demultiplexing module. A second port or a third port of the first optical switch is an input/output port of the CO device.

The microwave photon generation module is configured to: generate N first optical carriers, and transmit the N first optical carriers to the modulation module, where wavelengths of the N first optical carriers are different, and N is an integer greater than 0.

The modulation module is configured to: modulate a baseband signal to the N first optical carriers, to obtain N second optical carriers; and transmit the N second optical carriers to the multiplexing module, where each of the N second optical carriers carries the baseband signal.

The multiplexing module is configured to: converge signals of the N second optical carriers onto one optical path, input the N second optical carriers to the first port of the first optical circulator, input the N second optical carriers from the second port of the first optical circulator to the first port of the first optical switch, and then output the N second optical carriers through the second port or the third port of the first optical switch.

The demultiplexing module is configured to: demultiplex a third optical carrier, and transmit, to the receiving array, an optical carrier obtained after the demultiplexing, where the third optical carrier is input through the second port or the third port of the first optical switch, passes through the first port of the first optical switch, is input from the second port of the first optical circulator, and then is output to the demultiplexing module from the third port of the first optical circulator.

Optionally, the power division module may be an optical power divider, an optical coupler, or another component capable of dividing an optical signal into two parts.

As all components that constitute the CO device are optical components, electrical noise and interference that are caused when an electrical frequency mixer is used can be avoided.

The CO device further includes a monitoring module. The monitoring module is connected to a control port of the first optical switch.

The monitoring module is configured to: if no optical signal has been detected on the first optical switch in a case that the first port and the second port of the first optical switch are connected but the first port and the third port of the first optical switch are disconnected, control the first port and the second port of the first optical switch to be disconnected and control the first port and the third port of the first optical switch to be connected, so that the N second optical carriers are output through the third port of the first optical switch; or if no optical signal has been detected in a case that the first port and the second port of the first optical switch are disconnected but the first port and the third port of the first optical switch are connected, control the first port and the second port of the first optical switch to be connected and control the first port and the third port of the first optical switch to be disconnected, so that the N second optical carriers are output through the second port of the first optical switch.

Whether there is an optical signal passing through the first optical switch is detected by using a first monitoring module, thereby determining whether an optical fiber connected to the second port or an optical fiber connected to the third port works normally. When any one of the optical fibers becomes faulty, a service performed by the optical fiber is switched to the other optical fiber, thereby implementing a self-healing function of a network.

Optionally, the multiplexing module is an arrayed waveguide grating (AWG).

In a feasible embodiment, the modulation module includes N modulators. An i^{th} modulator of the N modulators is configured to: modulate the baseband signal to an i^{th} first optical carrier of the N first optical carriers, to obtain an i^{th} second optical carrier of the N second optical carriers, where i = 1, 2, 3, ..., or N.

An embodiment of this application provides an RRH, including: a wavelength selection circuit, a signal processing circuit, and a transmit/receive circuit.

A first port and a second port of the wavelength selection circuit are a first port and a second port of the RRH, respectively. A third port and a fourth port of the wavelength selection circuit are connected to a first port and a second port of the signal processing circuit, respectively. A third port of the signal processing circuit is connected to an input/output port of the transmit/receive circuit.

The wavelength selection circuit is configured to: obtain a target optical carrier from second optical carriers that are received from a port 1, and output all the received second optical carriers except the target optical carrier from a port 2, where the port 1 is the first port or the second port of the wavelength selection circuit, the port 2 is the first port or the second port of the wavelength selection circuit, and the port 1 is different from the port 2.

The signal processing circuit is configured to: divide, into a first target optical carrier and a second target optical carrier, optical carriers input from the first port; convert the first target optical carrier into an electrical signal; transmit the electrical signal to the transmit/receive circuit; erase a baseband signal in the second target optical carrier to obtain a seed optical signal; modulate, to the seed optical signal to obtain a third optical carrier, an uplink signal received by the transmit/receive circuit; and output the third optical carrier to the wavelength selection circuit through the second port of the signal processing circuit.

The transmit/receive circuit is configured to: transmit the electrical signal obtained by the signal processing circuit, and receive the uplink signal.

The wavelength selection circuit is configured to output the received third optical carrier through the port 1.

The seed optical signal is obtained by erasing the baseband signal carried in the first target optical carrier; and the uplink signal is modulated to the seed optical signal. Because a wavelength of the seed optical signal is the same as a wavelength of the first optical carrier, frequency synchronization between an uplink optical carrier and a downlink optical carrier can be implemented by using a same light source, and electrical noise and interference that are caused when an electrical frequency mixer is used can be avoided.

In a feasible embodiment, the wavelength selection circuit includes a second optical circulator, a first wavelength selection control module, a second wavelength selection control module, and a second optical switch.

A first port and a third port of the second optical circulator are the first port and the second port of the wavelength selection circuit, respectively. A second port and a fourth port of the second optical circulator are connected to a first port and a second port of the second optical switch by using the first wavelength selection control module and the second wavelength selection control module, respectively. A third port and a fourth port of the second optical switch are the third port and the fourth port of the wavelength selection circuit, respectively.

When the second optical carriers are input from the first port of the second optical circulator, and output to the first wavelength selection control module through the second port of the second optical circulator:
the first wavelength selection control module is configured to: obtain the target optical carrier from the received second optical carriers; output the target optical carrier to the first port of the second optical switch; then output the target optical carrier from the third port of the second optical switch; output all the received second optical carriers except the target optical carrier to the second port of the second optical circulator for input; and output all the received second optical carriers except the target optical carrier from the third port of the second optical circulator; and
the second optical circulator is configured to: output, from the first port of the second optical circulator, the third optical carrier that is input from the fourth port and the second port of the second optical switch and that is input to the fourth port of the second optical circulator through the second wavelength selection control module. When the second optical carriers are input from the third port of the second optical circulator, and output to the second wavelength selection control module through the fourth port of the second optical circulator:
   the second wavelength selection control module is configured to: obtain the target optical carrier from the received second optical carriers; output the target optical carrier to the second port of the second optical switch; then output the target optical carrier from the third port of the second optical switch; output all the received second optical carriers except the target optical carrier to the fourth port of the second optical circulator for input; and output all the received second optical carriers except the target optical carrier from the first port of the second optical circulator; and
   the second optical circulator is configured to: output, from the third port of the second optical circulator, the third optical carrier that is input from the fourth port and the first port of the second optical switch and that is input to the second port of the second optical circulator through the first wavelength selection control module.

As the optical components are introduced, electrical noise and interference that are caused when an electrical frequency mixer is used can be avoided. This further avoids using a costly correction scheme that is required when the electrical frequency mixer is used.

In a feasible embodiment, the wavelength selection circuit further includes a second monitoring module. The second monitoring module is connected to a control port of the second optical switch.

The second monitoring module is configured to: detect whether there is an optical signal passing through the second optical switch, and control connection and disconnection between ports of the second optical switch according to a detection result; and
if no optical signal has been detected in a case that the first port and the third port of the second optical switch are connected and the second port and the fourth port thereof are connected, control the first port and the fourth port of the second optical switch to be connected and control the second port and the third port thereof to be connected; or if no optical signal has been detected in a case that the first port and the fourth port of the second optical switch are connected and the second port and the third port thereof are connected, control the first port and the third port of the second optical switch to be connected and control the second port and the fourth port thereof to be connected.

Connection and disconnection between all the ports of the second optical switch are controlled by detecting whether there is an optical signal passing through the second optical switch, so that the optical signal can be input and output normally.

In a feasible embodiment, the wavelength selection circuit further includes a configuration module. A first port of the configuration module is connected to the second port of the second optical circulator. A second port of the configuration module is connected to the first wavelength selection control module and the second wavelength selection control module.

The configuration module is configured to: obtain a common optical carrier from optical carriers that are output from the second port of the second optical circulator; parse out wavelength selection information from the common optical carrier; and transmit the wavelength selection information to the first wavelength selection control module and the second wavelength selection control module, so that the first wavelength selection control module or the second wavelength selection control module can obtain the target optical carrier from the received second optical carriers according to the wavelength selection information.

As the wavelength selection information is introduced, it is ensured that different RRHs select optical carriers of different wavelengths, thereby implementing automatic management of wavelength selection of the RRHs.

In a feasible embodiment, a wavelength of the target optical carrier is the same as a wavelength of an optical carrier required by an RRH.

In a feasible embodiment, the signal processing circuit includes: a power division module, a reflective semiconductor optical amplifier (RSOA), a low-noise amplifier (LNA), a photodiode (PD), and an optical isolator.

An input port of the power division module and a reverse end of the optical isolator are the first port and the second port of the signal processing circuit, respectively. A first output port of the power division module is connected to a first port of the RSOA. A second output port of the power division module is connected to a first port of the PD. A second port of the RSOA is connected to a first port of the LNA. A third port of the RSOA is connected to a forward end of the optical isolator. A second port of the LNA and a second port of the PD constitute the third port of the signal processing circuit.

The power division module is configured to: divide, into a first target optical carrier and a second target optical carrier, the target optical carrier that is input from the input port of the power division module; and output the first target optical carrier and the second target optical carrier to the RSOA and the PD through the first output port and the second output port, respectively.

The PD is configured to: convert the second target optical carrier into an electrical signal, and output the electrical signal from the second port of the PD.

The RSOA is configured to: erase the baseband signal carried in the first target optical carrier, to obtain a seed optical signal; modulate, to the seed optical signal to obtain a third optical carrier, an uplink signal that is input from the second port of the RSOA; and output the third optical carrier by using the optical isolator.

The uplink signal is transmitted from the second port of the LNA to the second port of the RSOA through the first port of the LNA.

According to a fourth aspect not covered by the claims but useful for understanding the invention, an embodiment of this application provides a communication method, applied to a communication system. The communication system includes a plurality of RRHs. The method includes:
modulating a baseband signal to N generated first optical carriers, to obtain N second optical carriers, where wavelengths of the N first optical carriers are different, and N is an integer greater than 0; obtaining a target optical carrier from second optical carriers received by any RRH of the plurality of RRHs; converting the target optical carrier into an electrical signal; and transmitting the electrical signal as a downlink signal.

In a feasible embodiment, the method in this embodiment further includes:
obtaining a seed optical signal according to the target optical carrier; and modulating a received uplink signal to the seed optical signal, to obtain a third optical carrier.

In a feasible embodiment, a wavelength of the target optical carrier obtained by the any RRH is the same as a wavelength of an optical carrier required by the any RRH; or the target optical carrier obtained by the any RRH is obtained from the received second optical carriers according to wavelength selection information.

In a feasible embodiment, the communication system further includes a CO device. The CO device is connected, by using a first optical fiber and a second optical fiber, to a ring network that is constituted by the plurality of RRHs and optical fibers. The method in this embodiment includes:
when it is detected that the first optical fiber becomes faulty, implementing transmission of an optical carrier between the CO device and the ring network by using the second optical fiber.

In a feasible embodiment, the method further includes:
when an optical fiber between two adjacent RRHs in the ring network becomes faulty, controlling the N second optical carriers to be transmitted in the ring network in a first direction and a second direction, where the first direction is different from the second direction.

According to a fifth aspect not covered by the claims but useful for understanding the invention, an embodiment of this application provides a communication method, including:
modulating a baseband signal to N generated first optical carriers, to obtain N second optical carriers, where wavelengths of the N first optical carriers are different, and N is an integer greater than 0; multiplexing the N second optical carriers onto one optical path; and outputting the N second optical carriers by using a first optical fiber. In a feasible embodiment, the method in this embodiment further includes:
obtaining a third optical carrier by using the first optical fiber, where the third optical carrier carries an uplink signal; and demultiplexing the third optical carrier.

In a feasible embodiment, the method in this embodiment further includes:
when it is detected that the first optical fiber becomes faulty, switching to a second optical fiber to transmit an optical carrier.

According to a sixth aspect not covered by the claims but useful for understanding the invention, an embodiment of this application provides a communication method, including:
obtaining a target optical carrier from received second optical carriers; obtaining a first target optical carrier and a second target optical carrier according to the target optical carrier, where the first target optical carrier and the second target optical carrier each carry a baseband signal; converting the first target optical carrier into an electrical signal; transmitting the electrical signal as a downlink signal; erasing the baseband signal in the second target optical carrier to obtain a seed optical signal; and modulating a received uplink signal to the seed optical signal, to obtain a third optical carrier.

In a feasible embodiment, a wavelength of the target optical carrier is the same as a wavelength of an optical carrier required by an RRH.

In a feasible embodiment, the obtaining a target optical carrier from received second optical carriers includes:
obtaining the target optical carrier from the received second optical carriers according to wavelength selection information.

According to a seventh aspect not covered by the claims but useful for understanding the invention, an embodiment of this application provides a computer storage medium, including computer instructions. When the computer instructions are run on an electronic device, the electronic device is enabled to perform some or all of the methods according to the fourth aspect, the fifth aspect, and the sixth aspect of this application.

According to an eighth aspect not covered by the claims but useful for understanding the invention, an embodiment of this application provides a computer program product. When the computer program product is run on a computer, the computer is enabled to perform some or all of the methods according to the fourth aspect, the fifth aspect, and the sixth aspect of this application.

First, function re-splitting of a distributed base station is implemented according to the solutions of this application. Compared with an existing architecture of a BBU and an RRH, a baseband signal processing function of the BBU and a baseband signal frequency mixing function of the RRH are performed on a CO device side for processing, and a few functions, such as sending a signal and receiving a signal, of an RRH are reserved, so that large bandwidth, low costs, and low power consumption are achieved, fault self-healing is realized, and a problem that an optical fiber becomes faulty is resolved. Second, the CO device and the RRH are implemented based on optical components, which eliminates dependence of a conventional base station on a high-performance electrical component. Finally, the RSOA in the RRH erases the baseband signal carried in the first target optical carrier, to obtain the seed optical signal, and modulates an uplink signal to the seed optical signal. Because a wavelength of the seed optical signal is the same as a wavelength of the first optical carrier, frequency synchronization between an uplink optical carrier and a downlink optical carrier can be implemented by using a same light source, and electrical noise and interference that are caused when an electrical frequency mixer is used can be avoided. This further avoids using a costly correction scheme that is required when the electrical frequency mixer is used.

These aspects or other aspects of this application are clearer and more comprehensible with reference to the following descriptions of embodiments.

### BRIEF DESCRIPTION OF DRAWINGS

To describe the technical solutions in embodiments of this application or in the conventional technology more clearly, the following briefly describes the accompanying drawings used in describing embodiments or the conventional technology. It is clear that the accompanying drawings in the following descriptions show some embodiments of this application, and a person of ordinary skill in the art may still derive other drawings from these accompanying drawings without creative efforts.
FIG. 1 is a schematic diagram of a structure of a distributed base station in the conventional technology;
FIG. 2 is a schematic diagram of a structure of a communication system according to an embodiment of this application;
FIG. 3 is a schematic diagram of a working principle when an optical fiber between a CO device and a ring network becomes faulty;
FIG. 4 is a schematic diagram of a working principle when an optical fiber in a ring network becomes faulty;
FIG. 5 is a schematic diagram of a structure of a CO device according to an embodiment of this application;
FIG. 6 is a schematic diagram of a structure of an RRH according to an embodiment of this application;
FIG. 7 is a schematic diagram of a structure of another RRH according to an embodiment of this application;
FIG. 8 is a schematic diagram of a structure of still another RRH according to an embodiment of this application; and
FIG. 9 is a schematic interactive flowchart of a communication method according to an embodiment of this application not covered by the claims but useful for understanding the invention.

### DESCRIPTION OF EMBODIMENTS

The following describes embodiments of this application with reference to the accompanying drawings.

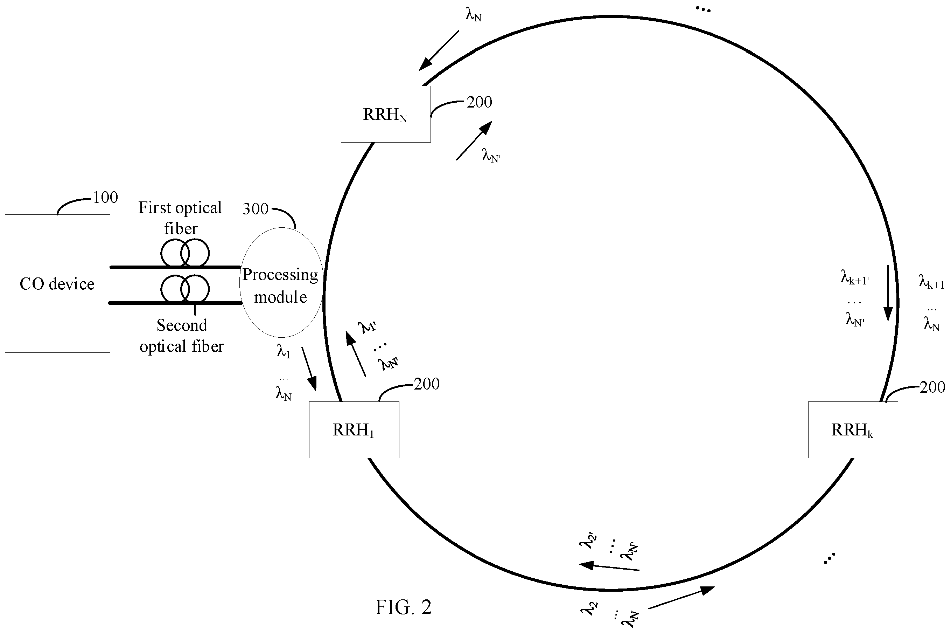

FIG. 2 is a schematic diagram of a structure of a communication system according to an embodiment of this application. As shown in FIG. 2, the distributed base station includes a CO device 100 and N RRHs 200, where N is an integer greater than 1. The N RRHs 200 are connected end to end by using optical fibers, to form a ring network. The CO device 100 is connected to the ring network by using at least two optical fibers. Optionally, the at least two optical fibers include a first optical fiber and a second optical fiber.

The CO device 100 generates N first optical carriers, where wavelengths of the N first optical carriers are different; and modulates a baseband signal to the N first optical carriers, to obtain N second optical carriers. As shown in FIG. 2, the N second optical carriers are denoted as: λ₁, ... , λ_{N}. The CO device 100 transmits the N second optical carriers to the ring network by using the first optical fiber. The N second optical carriers are transmitted in the ring network in a first direction. Optionally, the first direction is a clockwise direction or a counterclockwise direction. Each RRH 200 of the plurality of RRHs 200 obtains a corresponding target optical carrier from received second optical carriers, and transmits, back to the ring network, all the received second optical carriers except the target optical carrier. Optionally, a wavelength of the target optical carrier obtained by the RRH is the same as a wavelength of an optical carrier required by the RRH.

As shown in FIG. 2, an RRH₁ in the N RRHs 200 selects a second optical carrier λ₁ from second optical carriers λ₁, ... , λ_{N} as a target optical carrier corresponding to the NRRH₁, and transmits second optical carriers λ₂, ... , λ_{N} back to the ring network, so that the second optical carriers λ₂, ... , λ_{N} continue to be transmitted in the ring network in the first direction; and an RRHₖ in the N RRHs 200 selects a second optical carrier λₖ from second optical carriers λₖ, ... , λ_{N} as a target optical carrier corresponding to the RRHₖ, and transmits second optical carriers λₖ₊₁, ... , λ_{N} back to the ring network, so that the second optical carriers λₖ₊₁, ... , λ_{N} continue to be transmitted in the ring network in the first direction, where the first direction is the counterclockwise direction.

For example, it is assumed that: The CO device outputs an optical carrier A and an optical carrier B whose wavelengths are X and Y, respectively; and in the ring network, a wavelength of an optical carrier required by an RRHA is X, and a wavelength of an optical carrier required by an RRHB is Y. In this case, a target optical carrier of the RRHA is the optical carrier A, and a target optical carrier of the RRHB is the optical carrier B.

In a feasible embodiment, when generating the N first optical carriers, the CO device 100 further generates a common optical carrier that is used to carry wavelength selection information. The CO device 100 transmits the common optical carrier and the N second optical carriers to a processing module 300 by using the first optical fiber or the second optical fiber. The processing module transmits the common optical carrier together with the N second optical carriers to the ring network, and controls the common optical carrier together with the N second optical carriers to be transmitted in the ring network in the first direction.

After receiving the common optical carrier and second optical carriers, each RRH 200 of the N RRHs 200 parses out the wavelength selection information from the common optical carrier. The RRH 200 obtains a target optical carrier from the received second optical carriers according to the wavelength selection information. After obtaining the target optical carrier, the RRH 200 transmits, back to the ring network, the common optical carrier together with all the received second optical carriers except the target optical carrier.

Each RRH 200 of the N RRHs 200 converts a corresponding target optical carrier into an electrical signal, and transmits the electrical signal as a downlink signal. Each RRH 200 receives an uplink signal, and modulates the uplink signal to a seed optical signal that is obtained according to the target optical carrier, thereby obtaining an uplink optical carrier. The uplink optical carrier is transmitted in the ring network in a second direction, and is transmitted to the CO device 100 by using the first optical fiber, where the seed optical signal is obtained according to the target optical carrier.

As shown in FIG. 2, after obtaining an uplink optical carrier λ_{N}', an RRH_{N} of the N RRHs transmits the uplink optical carrier λ_{N}' to the ring network, and then the uplink optical carrier λ_{N}' is transmitted in the second direction; and after obtaining an uplink optical carrier λₖ', an RRHₖ of the N RRHs transmits the uplink optical carrier λₖ' to the ring network, and then the uplink optical carrier λ_{y}' is transmitted in the second direction and finally transmitted to the CO device 100, where the first direction is different from the second direction.

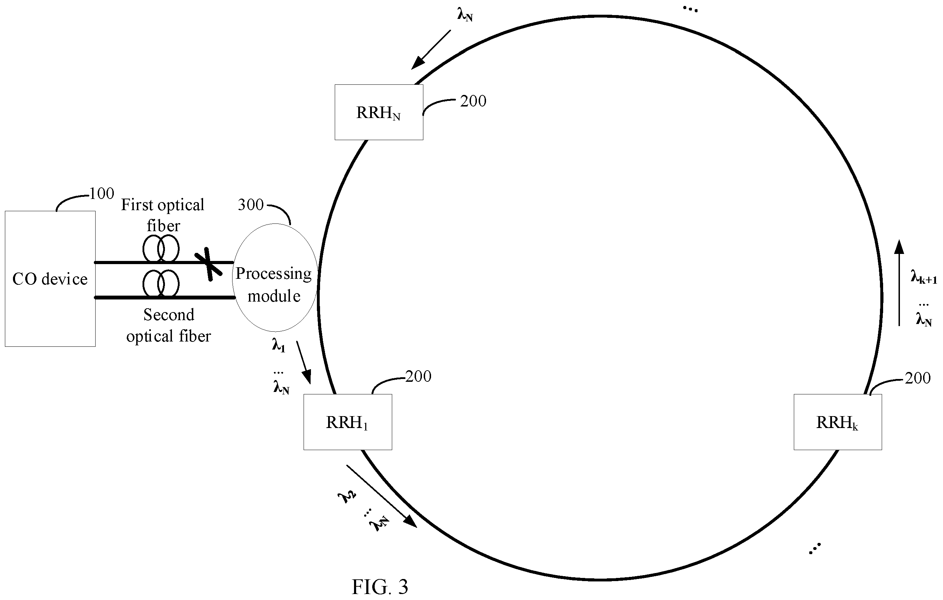

As shown in FIG. 3, when detecting that the first optical fiber becomes faulty, the CO device 100 transmits the N second optical carriers to the ring network by using the second optical fiber.

In a feasible embodiment, the communication system further includes a processing module 300. The processing module 300 is connected between the CO device 100 and the ring network. The processing module 300 is connected to the CO device 100 by using the at least two optical fibers.

When detecting that an optical fiber of the ring network becomes faulty, the processing module 300 controls the N second optical carriers to be transmitted in the ring network in the first direction and the second direction, where the first direction is a clockwise direction or a counterclockwise direction, the second direction is the counterclockwise direction or the clockwise direction, and the first direction is different from the second direction. Each RRH 200 of the N RRHs 200 obtains a corresponding target optical carrier in the foregoing manner, and performs subsequent processing.

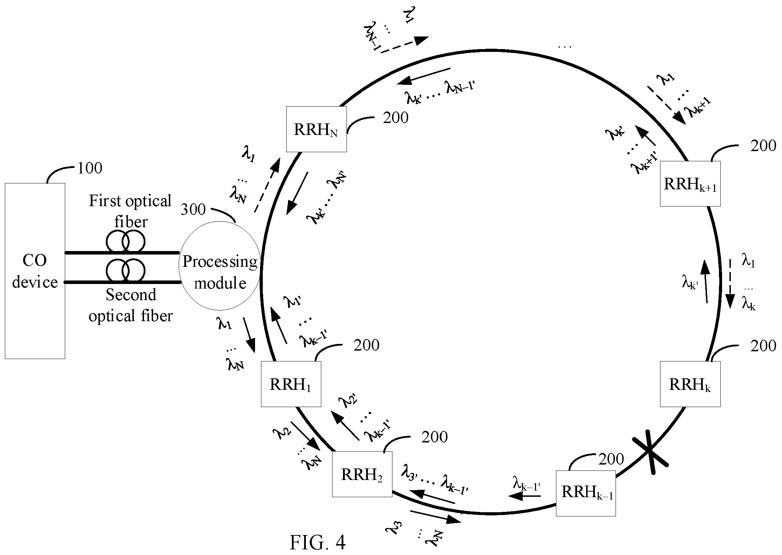

As shown in FIG. 4, an optical fiber between an RRHₖ₋₁ and an RRHₖ of the N RRHs becomes faulty. The processing module 300 controls the N second optical carriers λ₁, ... , λ_{N} to be transmitted in the ring network in the first direction and the second direction, respectively. The first direction is the counterclockwise direction, and the second direction is the clockwise direction. For each RRH of the RRH₁, the RRHₖ₋₁, and an RRH therebetween, second optical carriers transmitted from the first direction are input from a first port of the RRH, and the RRH obtains, from received second optical carriers, a target optical carrier corresponding to the RRH, transmits an obtained uplink optical carrier in the second direction, and transmits the uplink optical carrier to the CO device 100 by using the processing module 300 and the first optical fiber. For each RRH of the RRHₖ, the RRH_{N}, and an RRH therebetween, second optical carriers transmitted from the second direction are input from a second port of the RRH, and the RRH obtains, from received second optical carriers, a target optical carrier corresponding to the RRH, transmits an obtained uplink optical carrier in the first direction, and transmits the uplink optical carrier to the CO device 100 by using the processing module 300 and the first optical fiber.

Optionally, the processing module 300 may be an optical coupler.

In a feasible embodiment, any two adjacent RRHs of the plurality of RRHs may be connected by using one optical fiber, or may be connected by using two optical fibers to implement bidirectional transmission of an uplink signal and a downlink signal. Certainly, the connection may alternatively be implemented by using more than two optical fibers. When the connection is implemented by using two optical fibers, interference between an uplink optical signal and a downlink optical signal can be avoided.

The following describes in detail a specific structure and a working principle of the CO device 100.

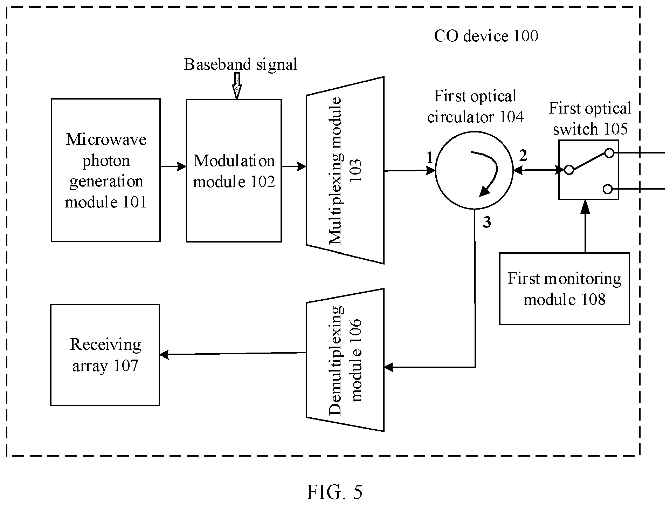

As shown in FIG. 5, the CO device 100 includes a microwave photon generation module 101, a modulation module 102, a multiplexing module 103, a first optical circulator 104, a first optical switch 105, a demultiplexing module 106, and a receiving array 107.

The microwave photon generation module 101 is connected to the multiplexing module 103 by using the modulation module 102. The multiplexing module 103 is connected to a first port of the first optical circulator 104. A second port of the first optical circulator 104 is connected to an input port of the first optical switch 105. A third port of the first optical circulator 104 is connected to the receiving array 107 by using the demultiplexing module 106. When an optical carrier is input from the first port of the first optical circulator 104, the optical carrier is output from the second port of the first optical circulator 104. A second port or a third port of the first optical switch 105 is an output port of the CO device 100. The second port of the first optical switch 105 is connected to one end of a first optical fiber. The third port of the first optical switch 105 is connected to one end of a second optical fiber. When an optical carrier is input from the second port of the first optical circulator 104, the optical carrier is output from the third port of the first optical circulator 104.

The microwave photon generation module 101 is configured to generate N first optical carriers, where wavelengths of the N first optical carriers are different, and N is an integer greater than 1.

The modulation module 102 is configured to modulate a baseband signal to the N first optical carriers, to obtain N second optical carriers, where each of the N second optical carriers carries the baseband signal. Optionally, the modulation module 102 includes N modulators. An i^{th} modulator of the N modulators modulates an input baseband signal to an i^{th} first optical carrier of N optical carriers, to obtain an i^{th} second optical carrier, where i = 1, 2, ..., or N. The multiplexing module 103 is configured to: converge the N second optical carriers onto one optical path, input the N second optical carriers to the first port of the first optical circulator 104, and output the N second optical carriers from the second port of the first optical circulator 104 to the first port of the first optical switch 105.

The first port and the second port of the first optical switch 105 are connected. The N second optical carriers are output from the second port of the first optical switch 105, and output to a processing module 300 by using the first optical fiber.

The demultiplexing module 106 is configured to: demultiplex a third optical carrier, and transmit, to the receiving array 107, an optical carrier obtained after the demultiplexing, where the third optical carrier is input from the second port of the first optical switch 105, passes through the first port of the first optical switch 105, is input from the second port of the first optical circulator 104, and then is output to the demultiplexing module 106 from the third port of the first optical circulator 104.

The first optical switch 105 may be a 1*2 optical switch. The multiplexing module 103 may be a 1*N multiplexing device, such as an AWG. The demultiplexing module 106 may be a 1 *N demultiplexer.

It should be noted herein that the N first optical carriers generated by the microwave photon generation module 101 include radio frequency signals. The modulation module 102 modulates the baseband signal to the N first optical carriers, to obtain the N second optical carriers. Specifically, the modulation module 102 modulates the baseband signal to the radio frequency signals in the N first optical carriers, thereby obtaining the N second optical carriers. Optionally, the CO device 100 further generates a common optical carrier that is used to carry wavelength selection information. The common optical carrier together with the N second optical carriers is transmitted to the ring network. Optionally, the CO device 100 further includes a first monitoring module 108. The first monitoring module 108 is connected to a control port of the first optical switch 105.

The first monitoring module 108 is configured to: detect whether there is an optical signal between the first port and the second port of the first optical switch 105 or between the first port and the third port of the first optical switch 105; and control, according to a detection result, the first port of the first optical switch 105 to be connected to or disconnected from the second port or the third port thereof.

If no optical signal has been detected in a case that the first port and the second port of the first optical switch 105 are connected but the first port and the third port of the first optical switch 105 are disconnected, it is determined that an optical fiber connected to the second port of the first optical switch 105 becomes faulty; and the first port of the first optical switch 105 is controlled to be disconnected from the second port of the first optical switch 105, and to be connected to the third port of the first optical switch 105.

If no optical signal has been detected in a case that the first port and the third port of the first optical switch 105 are connected but the first port and the second port of the first optical switch 105 are disconnected, it is determined that an optical fiber connected to the third port of the first optical switch 105 becomes faulty; and the first port of the first optical switch 105 is controlled to be connected to the second port of the first optical switch 105, and to be disconnected from the third port of the first optical switch 105.

As shown in FIG. 3, in a case that the first port and the second port of the first optical switch 105 are connected but the first port and the third port thereof are disconnected, an optical signal is transmitted between the CO device 100 and the processing module 300 by using the first optical fiber. When the first optical fiber becomes faulty, the first monitoring module 108 detects that there is no optical signal between the first port and the second port of the first optical switch 105; and the first monitoring module 108 controls the first port of the first optical switch 105 to be connected to the third port of the first optical switch 105, and to be disconnected from the second port of the first optical switch 105, so that an optical signal is transmitted between the CO device 100 and the processing module 300 by using the second optical fiber.

The monitoring module detects whether there is an optical signal passing through the first optical switch 105, to determine whether a fault occurs in an optical fiber that is connected to the first optical switch 105; and when it is determined that a fault occurs, the optical switch is controlled to switch a path. Therefore, a system self-healing function is implemented.

Redundant optical fiber protection is used between the CO device 100 and the processing module 300. As shown in FIG. 3, when the first optical fiber becomes abnormal, the first monitoring module 108 of the CO device 100 monitors whether optical power on the first optical switch 105 is abnormal. The first monitoring module 108 of the CO device 100 determines, by monitoring whether the optical power on the first optical switch 105 is abnormal, whether bearing of the optical fiber becomes abnormal. Once the bearing of the optical fiber becomes abnormal, the first optical switch 105 is triggered to perform automatic switching, to switch to the second optical fiber for normal transmission. Abnormality indicates that an optical path becomes abnormal due to a fault in an optical fiber. As a result, an RRH becomes abnormal in performing reception and transmission.

The following describes in detail a specific structure and a working principle of the RRH.

Each RRH of the foregoing N RRHs includes a wavelength selection circuit 21, a signal processing circuit 22, and a transmit/receive circuit 23. A first port and a second port of the wavelength selection circuit 21 are a first port and a second port of the RRH, respectively. A third port and a fourth port of the wavelength selection circuit 21 are connected to a first port and a second port of the signal processing circuit 22, respectively. A third port of the signal processing circuit 22 is connected to an input/output port of the transmit/receive circuit 23.

The wavelength selection circuit 21 is configured to: obtain a target optical carrier from second optical carriers that are received from a port 1, and output all the received second optical carriers except the target optical carrier from a port 2, where the port 1 is the first port or the second port of the wavelength selection circuit 21, the port 2 is the first port or the second port of the wavelength selection circuit 21, and the port 1 is different from the port 2.

The signal processing circuit 22 is configured to: divide, into a first target optical carrier and a second target optical carrier, optical carriers input from the first port; convert the first target optical carrier into an electrical signal; transmit the electrical signal to the transmit/receive circuit 23; erase a baseband signal in the second target optical carrier to obtain a seed optical signal; modulate, to the seed optical signal to obtain a third optical carrier, an uplink signal received by the transmit/receive circuit 23; and output the third optical carrier to the wavelength selection circuit 21 through the second port of the signal processing circuit 22.

The transmit/receive circuit 23 is configured to: transmit the electrical signal obtained by the signal processing circuit 22, and receive the uplink signal.

The wavelength selection circuit 21 is configured to output the received third optical carrier through the port 1.

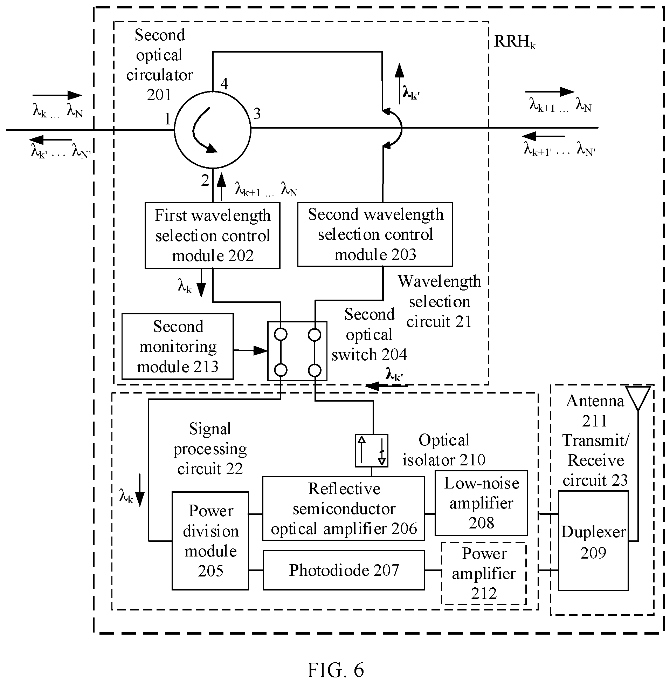

In a feasible embodiment, as shown in FIG. 6, the wavelength selection circuit 21 includes a second optical circulator 201, a first wavelength selection control module 202, a second wavelength selection control module 203, and a second optical switch 204.

A first port and a third port of the second optical circulator 201 are the first port and the second port of the wavelength selection circuit 21, respectively. A second port and a fourth port of the second optical circulator 201 are connected to a first port and a second port of the second optical switch 204 by using the first wavelength selection control module 202 and the second wavelength selection control module 203, respectively. A third port and a fourth port of the second optical switch 204 are the third port and the fourth port of the wavelength selection circuit 21, respectively.

When the second optical carriers are input from the first port of the second optical circulator 201, and output to the first wavelength selection control module 202 through the second port of the second optical circulator 201:
the first wavelength selection control module 202 is configured to: obtain the target optical carrier from the received second optical carriers; output the target optical carrier to the first port of the second optical switch 204; then output the target optical carrier from the third port of the second optical switch 204; output all the received second optical carriers except the target optical carrier to the second port of the second optical circulator 201 for input; and output all the received second optical carriers except the target optical carrier from the third port of the second optical circulator 201; and
the second optical circulator 201 is configured to: output, from the first port of the second optical circulator 201, the third optical carrier that is input from the fourth port and the second port of the second optical switch 204 and that is input to the fourth port of the second optical circulator 201 through the second wavelength selection control module.

When the second optical carriers are input from the third port of the second optical circulator 201, and output to the second wavelength selection control module 203 through the fourth port of the second optical circulator 201:
the second wavelength selection control module 203 is configured to: obtain the target optical carrier from the received second optical carriers; output the target optical carrier to the second port of the second optical switch 204; then output the target optical carrier from the third port of the second optical switch 204; output all the received second optical carriers except the target optical carrier to the fourth port of the second optical circulator 201 for input; and output all the received second optical carriers except the target optical carrier from the first port of the second optical circulator 201; and
the second optical circulator 201 is configured to: output, from the third port of the second optical circulator 201, the third optical carrier that is input from the fourth port and the first port of the second optical switch 204 and that is input to the second port of the second optical circulator 201 through the first wavelength selection control module.

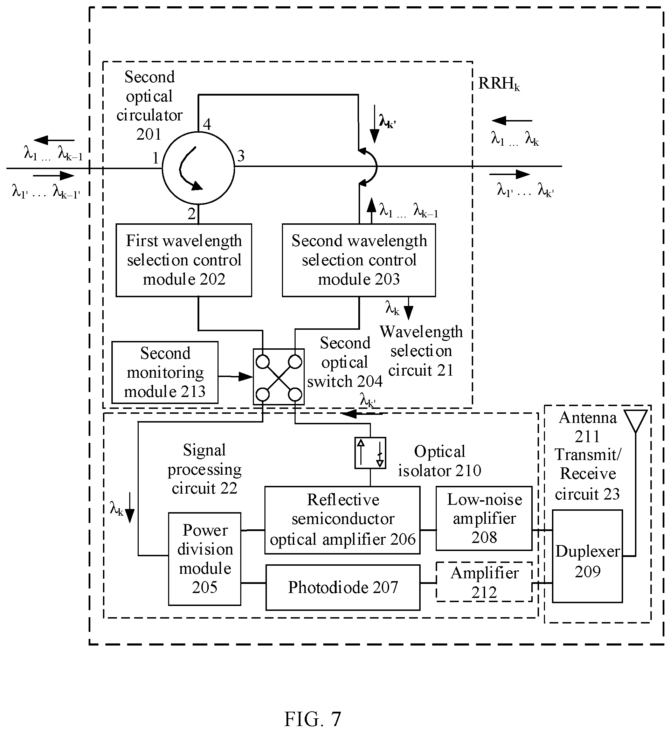

In a feasible embodiment, as shown in FIG. 7, the wavelength selection circuit 21 further includes a second monitoring module 213. The second monitoring module 213 is connected to a control port of the second optical switch 204. The second monitoring module 213 is configured to: detect whether there is an optical signal passing through the second optical switch 204, and control connection and disconnection between ports of the second optical switch 204 according to a detection result; and
if no optical signal has been detected in a case that the first port and the third port of the second optical switch 204 are connected and the second port and the fourth port thereof are connected, control the first port and the fourth port of the second optical switch 204 to be connected and control the second port and the third port thereof to be connected; or if no optical signal has been detected in a case that the first port and the fourth port of the second optical switch 204 are connected and the second port and the third port thereof are connected, control the first port and the third port of the second optical switch 204 to be connected and control the second port and the fourth port thereof to be connected.

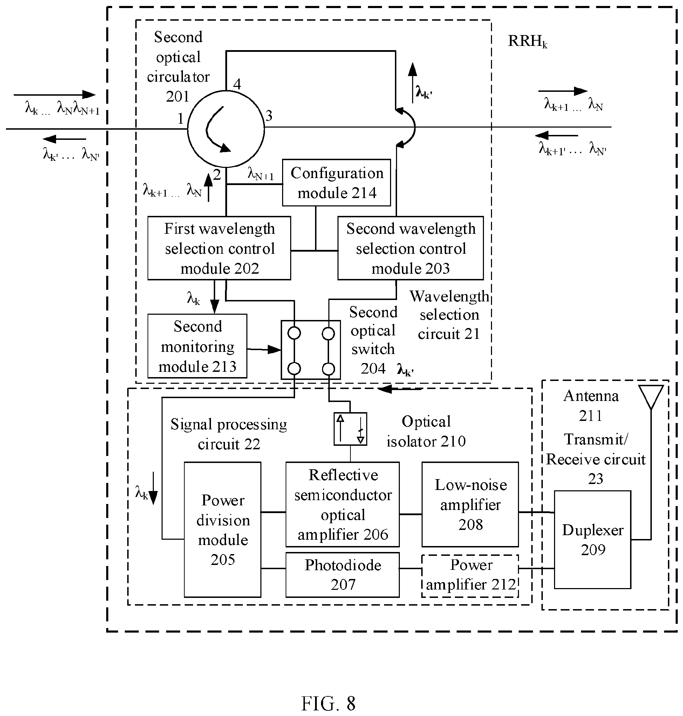

In a feasible embodiment, as shown in FIG. 8, the wavelength selection circuit 21 further includes a configuration module 214. A first port of the configuration module 214 is connected to the second port of the second optical circulator 201. A second port of the configuration module 214 is connected to the first wavelength selection control module 202 and the second wavelength selection control module 203.

The configuration module 214 is configured to: obtain a common optical carrier from optical carriers that are output from the second port of the second optical circulator 201; parse out wavelength selection information from the common optical carrier; and transmit the wavelength selection information to the first wavelength selection control module 202 and the second wavelength selection control module 203, so that the first wavelength selection control module 202 or the second wavelength selection control module 203 can obtain the target optical carrier from the received second optical carriers according to the wavelength selection information.

In a feasible embodiment, a wavelength of the target optical carrier is the same as a wavelength of an optical carrier required by an RRH.

In a feasible embodiment, as shown in FIG. 6, the signal processing circuit 22 includes a power division module 205, an RSOA 206, an LNA 208, a PD 207, and an optical isolator 210.

An input port of the power division module 205 and a reverse end of the optical isolator 210 are the first port and the second port of the signal processing circuit 22, respectively. A first output port of the power division module 205 is connected to a first port of the RSOA 206. A second output port of the power division module 205 is connected to a first port of the PD 207. A second port of the RSOA 206 is connected to a first port of the LNA 208. A third port of the RSOA 206 is connected to a forward end of the optical isolator 210. A second port of the LNA 208 and a second port of the PD 207 constitute the third port of the signal processing circuit 22.

The power division module 205 is configured to: divide, into a first target optical carrier and a second target optical carrier, the target optical carrier that is input from the input port of the power division module 205; and output the first target optical carrier and the second target optical carrier to the RSOA 206 and the PD 207 through the first output port and the second output port, respectively.

The PD 207 is configured to: convert the second target optical carrier into an electrical signal, and output the electrical signal from the second port of the PD 207.

The RSOA 206 is configured to: erase the baseband signal carried in the first target optical carrier, to obtain a seed optical signal; modulate, to the seed optical signal to obtain a third optical carrier, an uplink signal that is input from the second port of the RSOA 206; and output the third optical carrier by using the optical isolator 210.

The uplink signal is transmitted from the second port of the LNA 208 to the second port of the RSOA 206 through the first port of the LNA 208.

It should be noted herein that the power division module 205 divides the target optical carrier into the first target optical carrier and the second target optical carrier according to a preset division ratio in terms of power; and a ratio of power of the first target optical carrier to power of the second target optical carrier is the foregoing preset division ratio.

The transmit/receive circuit 23 includes a duplexer 209 and an antenna 211. The electrical signal converted from the first target optical carrier is transmitted by sequentially using the duplexer 209 and the antenna 211. The uplink signal is input to the signal processing circuit 22 by using the antenna 211 and the duplexer 209.

The following describes a structure and a function of the RRH 200 as a whole.

As shown in FIG. 6, each RRH of the N RRHs includes: a second optical circulator 201, a first wavelength selection control module 202, a second wavelength selection control module 203, a second optical switch 204, a power division module 205, an RSOA 206, a PD 207, an LNA 208, a duplexer 209, an optical isolator 210, and an antenna 211.

A first port and a third port of the second optical circulator 201 are the first port and the second port of the RRH, respectively. A second port and a fourth port of the second optical circulator 201 are connected to a first port and a second port of the second optical switch 204 by using the first wavelength selection control module 202 and the second wavelength selection control module 203, respectively. A third port of the second optical switch 204 is connected to an input port of the power division module 205. A first output port of the power division module 205 is connected to a first port of the RSOA 206. A second output port of the power division module 205 is connected to the duplexer 209 by using the PD 207. A second port of the RSOA 206 is connected to the duplexer 209 by using the LNA 208. A third port of the RSOA 206 is connected to a forward end of the optical isolator 210. A reverse end of the optical isolator 210 is connected to a fourth port of the second optical switch 204. The duplexer 209 is connected to the antenna 211. The second optical switch 204 is a 2*2 optical switch.

Optionally, the power division module 205 may be an optical power divider, an optical coupler, or another functional component capable of dividing an optical signal into two parts.

It should be noted herein that the second optical circulator 201 is used as a router module; and an optical circulator is an implementation for routing, and may alternatively be implemented by using another apparatus. Uplink and downlink of the ring network may be implemented in a co-fiber manner or a non-co-fiber manner, where the two manners differ only on a connection manner of the router module.

In a feasible embodiment, when the second optical carriers are input from the first port in the RRH (namely, the first port of the second optical circulator 201 of the RRH), and output to the first wavelength selection control module 202 through the second port of the second optical circulator 201 of the RRH, the first wavelength selection control module 202 obtains a target optical carrier from received second optical carriers; outputs the target optical carrier to the first port of the second optical switch 204; outputs all the received second optical carriers except the target optical carrier to the second port of the second optical circulator 201; and outputs all the received second optical carriers except the target optical carrier from the third port of the second optical circulator 201 to a downlink RRH of the RRH.

The first port and the third port of the second optical switch 204 are connected while the second port and the fourth port thereof are connected, and the target optical carrier is output from the third port of the second optical switch 204 to the input port of the power division module 205.

The power division module 205 is configured to: divide, into a first optical carrier and a second optical carrier, the target optical carrier that is input from the input port of the power division module 205; and output the first target optical carrier and the second target optical carrier to the first port of the RSOA 206 and the PD 207 through the first output port and the second output port, respectively.

The PD 207 is configured to: convert the second target optical carrier into an electrical signal, and transmit out the electrical signal by using the duplexer 209 and the antenna 211. Power of the first target optical carrier may be the same as or different from that of the second target optical carrier.

The RSOA 206 is configured to: erase a baseband signal carried in the first optical carrier, to obtain a seed optical signal; modulate, to the seed optical signal to obtain a third optical carrier, an uplink signal that passes through the antenna 211, the duplexer 209, and the LNA 208; transmit the third optical carrier to the fourth port of the second optical circulator 201 through the optical isolator 210, the fourth port and the second port of the second optical switch 204, and the second wavelength selection control module 203; and output the third optical carrier from the first port of the second optical circulator 201.

In a feasible embodiment, when the second optical carriers are input from the third port in the RRH (namely, the second port of the second optical circulator 201 of the RRH), and output to the second wavelength selection control module 203 through the fourth port of the second optical circulator 201 of the RRH, the second wavelength selection control module 203 obtains a target optical carrier from received second optical carriers; outputs the target optical carrier to the first port of the second optical switch 204; outputs all the received second optical carriers except the target optical carrier to the second port of the second optical circulator 201; and outputs all the received second optical carriers except the target optical carrier from the third port of the second optical circulator 201 to a downlink RRH of the RRH.

The first port and the fourth port of the second optical switch 204 are connected while the second port and the third port thereof are connected, and the target optical carrier is output from the third port of the second optical switch 204 to the input port of the power division module 205.

The power division module 205 is configured to: divide, into a first optical carrier and a second optical carrier, the target optical carrier that is input from the input port of the power division module 205; and output the first target optical carrier and the second target optical carrier to the first port of the RSOA 206 and the PD 207 through the first output port and the second output port, respectively.

The PD 207 is configured to: convert the second target optical carrier into an electrical signal, and transmit out the electrical signal by using the duplexer 209 and the antenna 211. Power of the first target optical carrier may be the same as or different from that of the second target optical carrier.

The RSOA 206 is configured to: erase a baseband signal carried in the first target optical carrier, to obtain a seed optical signal; modulate, to the seed optical signal to obtain a third optical carrier, an uplink signal that passes through the antenna 211, the duplexer 209, and the LNA 208; transmit the third optical carrier to the second port of the second optical circulator 201 through the optical isolator 210, the fourth port and the first port of the second optical switch 204, and the first wavelength selection control module 202; and output the third optical carrier from the third port of the second optical circulator 201.

It should be noted herein that the RSOA 206 works in the saturation region, and erases the baseband signal in the first target optical carrier, to obtain the seed optical signal.

Optionally, the foregoing RRH further includes a power amplifier (PA) 212. An input port of the PA 212 is connected to an output port of the PD 207. An output port of the PA 212 is connected to the duplexer 209. The PA 212 amplifies an electrical signal output by the PD 207, and transmits, by using the duplexer 209, an amplified signal to the antenna 211 for transmission, thereby resolving a problem that power of the electrical signal output by the PD 207 is too low to satisfy a transmission requirement.

Optionally, the RRH 200 further includes a second monitoring module 213. The second monitoring module 213 is connected to a control port of the second optical switch 204.

The second monitoring module 213 is configured to: detect whether there is an optical signal passing through the second optical switch 204; and if it is detected, in a case that the first port and the third port of the second optical switch 204 are connected and the second port and the fourth port thereof are connected, that there is no optical signal passing through the second optical switch 204, control the second port and the third port of the second optical switch 204 to be connected and control the first port and the fourth port thereof to be connected, as shown in FIG. 7; or
if it is detected, in a case that the first port and the fourth port of the second optical switch 204 are connected and the second port and the third port thereof are connected, that there is no optical signal passing through the second optical switch 204, control the first port and the third port of the second optical switch 204 to be connected and control the second port and the fourth port thereof to be connected, as shown in FIG. 6.

As shown in FIG. 6, the first port and the third port of the second optical switch 204 are connected while the second port and the fourth port thereof are connected, and the second monitoring module 213 detects that there is no optical signal passing through the second optical switch 204. In this case, the second monitoring module 213 controls the first port and the fourth port of the second optical switch 204 to be connected and controls the second port and the third port thereof to be connected, as shown in FIG. 7; second optical carriers λ₁, ... , λₖ are input from the third port of the second optical circulator 201, and output to the second wavelength selection control module 203 through the fourth port of the second optical circulator 201; the second wavelength selection control module 203 selects a target optical carrier λₖ from the second optical carriers λ₁, ..., λₖ, and outputs second optical carriers λ₁, ... , λₖ₋₁ through the first port of the second wavelength selection control module 203; and the second optical carriers λ₁, ... , λₖ₋₁ are input through the fourth port of the second optical circulator 201, and output through the third port, so as to be transmitted to a next RRH.

The target optical carrier λₖ is transmitted to the input port of the power division module 205 through the second port and the third port of the second optical switch 204. The power division module 205 divides the target optical carrier into a first target optical carrier and a second target optical carrier; and outputs the first target optical carrier and the second target optical carrier to the RSOA 206 and the PD 207 through the first output port and the second output port, respectively. The PD 207 converts the second target optical carrier into an electrical signal; and transmits, by using the duplexer 209, the electrical signal to the antenna 211 for transmission. The RSOA 206 works in a saturation region, and erases a baseband signal in a radio frequency signal of the first target optical carrier, to obtain a seed optical signal. An uplink signal received by the antenna 211 is input to the LNA 208 by using the duplexer 209. The LNA 208 amplifies the uplink signal. The RSOA 206 modulates an amplified uplink signal to a radio frequency signal of the seed optical signal, to obtain a third optical carrier λₖ'. The third optical carrier λₖ' is output through the third port of the RSOA 206, input to the fourth port of the second optical switch 204 after passing through the optical isolator 210, output to the second port of the second optical circulator 201 after passing through the second optical switch 204 and the first wavelength selection control module 202, and output from the third port of the second optical circulator 201.

Optionally, as shown in FIG. 8, the foregoing RRH further includes a configuration module 214. A first port of the configuration module 214 is connected to the second port of the second optical circulator 201. A second port of the configuration module 214 is connected to a control port of the first wavelength selection control module 202 and a control port of the second wavelength selection control module 203.

The configuration module 214 obtains a common optical carrier from optical carriers that are output from the second port of the second optical circulator 201; and parses out wavelength selection information from the common optical carrier. The first wavelength selection control module 202 obtains a target optical carrier from received second optical carriers according to the wavelength selection information. The second wavelength selection control module 203 obtains a target optical carrier from received second optical carriers according to the wavelength selection information. After the first wavelength selection control module 202 of the RRH selects the target optical carrier, the configuration module 214 records the optical carrier selected by the RRH, and ensures that different RRHs select optical carriers of different wavelengths, thereby implementing automatic management of wavelength selection of the RRHs.

It should be noted herein that the second port of the second optical circulator 201 is connected to the configuration module 214 and the first wavelength selection control module 202 by using a 1*2 optical switch, where an input port of the optical switch is connected to the second port of the second optical circulator 201; and a first output port and a second output port of the optical switch are connected to the configuration module 214 and the first wavelength selection control module 202, respectively. When the second port of the second optical circulator 201 outputs a common optical carrier, the input port of the foregoing 1 *2 optical switch is connected to the first output port, so that the common optical carrier is transmitted to the configuration module 214. After the common optical carrier passes through the optical switch, the input port of the optical switch is connected to the second output port thereof, so that the foregoing second optical carriers are transmitted to the first wavelength selection control module 202.

It can be learned that in the solution of this application, a deployment of an all-optical base station is implemented by using optical components and a networking deployment architecture. An RSOA technology is used to ensure that uplink and downlink of the base station use a same optical carrier, that is, a same optical carrier is used, in optical domain, as frequency mixing signals of microwave signals, thereby implementing frequency synchronization and avoiding electrical noise and interference that are caused when an electrical frequency mixer is used. This further avoids using a costly correction scheme that is required when the electrical frequency mixer is used. As the RSOA and the wavelength selection control modules are used, undifferentiated deployments of RRHs are implemented, and some limitations of conventional electrical components are overcome. For example, in a conventional base station that uses an electrical component, higher bandwidth leads to a higher specification, a higher cost of the base station, and a more complex structure. Therefore, the solution provided in this application has more advantages.

For example, when an optical fiber in a ring network becomes abnormal, an RRH having such design can implement automatic switching. Specifically, when signal transmission in the ring network is interrupted, signal transmission of the ring network is switched to tree transmission, thereby implementing bidirectional transmission of data. As shown in FIG. 4, after an optical fiber between an RRHₖ₋₁ and an RRHₖ becomes faulty, that is, after an optical fiber link between the RRHₖ₋₁ and the RRHₖ is interrupted, an uplink communication link and a downlink communication link from an RRH₁ to the RRHₖ₋₁ are not affected; the RRH₁ to the RRHₖ₋₁ perform transmission in an original manner; the RRHₖ to an RRH_{N} cannot receive a downlink signal due to interruption fault of the optical fiber; and the second monitoring module 213 of each of the RRHₖ to the RRH_{N} starts switching of the second optical switch 204 after detecting that optical receiving power is abnormal (that is, no optical signal has been detected). A working principle of the second monitoring module 213 of the RRH is consistent with that of the first monitoring module of the CO device, and includes: determining whether optical power in an optical fiber becomes abnormal, and starting switching of the optical switch when it is determined that the optical power becomes abnormal. As shown in FIG. 7, for the RRHₖ, a downlink signal (namely, a second optical carrier) is input from the third port of the second optical circulator 201, and output from the fourth port thereof; and after passing through the second optical switch 204, an uplink signal (that is, a third optical carrier) is input through the second port of the second optical circulator 201, and output from the third port of the second optical circulator 201 to an optical fiber for transmission.

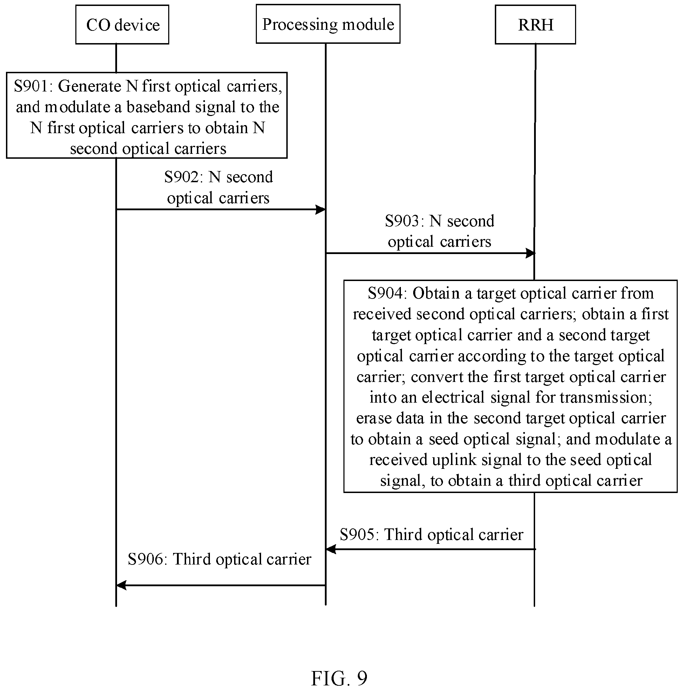

FIG. 9 is a schematic interactive flowchart of a communication method according to an embodiment of this application. The method is applied to a base station. The base station includes a CO device, a processing module, and a plurality of RRHs. The plurality of RRHs constitute a ring network by using optical fibers. As shown in FIG. 9, the method includes the following steps.

S901: The CO device generates N first optical carriers, and modulates a baseband signal to the N first optical carriers to obtain N second optical carriers.

Wavelengths of the N first optical carriers are different.

Specifically, each of the N first optical carriers includes a radio frequency signal. The modulating a baseband signal to the N first optical carriers to obtain N second optical carriers is specifically: modulating the baseband signal to the radio frequency signal of each of the N first optical carriers, to obtain the N second optical carriers.

S902: The CO device transmits the N second optical carriers to the processing module.

Specifically, the CO device is connected to the processing module by using a first optical fiber and a second optical fiber. Transmission of an optical carrier between the CO device and the processing module is implemented by using any optical fiber of the first optical fiber and the second optical fiber. When the optical fiber becomes faulty, the other optical fiber is used to transmit the optical carrier between the CO device and the processing module.

S903: The processing module transmits the N second optical carriers to the RRH.

The processing module is coupled to the ring network constituted by the plurality of RRHs. That the processing module transmits the N second optical carriers to the RRH is specifically: The processing module transmits the N second optical carriers to the ring network.

When an optical fiber between two adjacent RRHs in the ring network works normally, the processing module controls the N second optical carriers to be transmitted in the ring network in a first direction. When an optical fiber between any two adjacent RRHs in the ring network works abnormally, the processing module controls the N second optical carriers to be transmitted in the ring network in the first direction and a second direction. The first direction may be a clockwise direction or a counterclockwise direction; the second direction may be the clockwise direction or the counterclockwise direction; and the first direction is different from the second direction.

S904: The RRH obtains a target optical carrier from received second optical carriers; obtains a first target optical carrier and a second target optical carrier according to the target optical carrier; converts the first target optical carrier into an electrical signal for transmission; erases data in the second target optical carrier to obtain a seed optical signal; and modulates a received uplink signal to the seed optical signal, to obtain a third optical carrier.

In an optional embodiment, a wavelength of the target optical carrier obtained by the RRH is the same as a wavelength of an optical carrier required by the RRH; or the RRH obtains the target optical carrier from the received second optical carriers according to wavelength selection information.

S905: The RRH transmits the third optical carrier to the processing module.

S906: The processing module transmits the third optical carrier to the CO device.

Specifically, after receiving the third optical carrier, the CO device demultiplexes the third optical carrier.

It should be noted herein that for specific functions of the CO device, the processing module, and the RRH, reference may be made to related descriptions of the CO device 100, the processing module 300, and the RRH 200 in FIG. 2 to FIG. 8. Details are not described herein again.

It should be noted herein that the solution in this application integrates an optical technology and a wireless technology; and an architecture and a protection solution of this application may be applied to the field of optical technologies, for example, the architecture is a networking architecture for wavelength division multiplexing (WDM).

Embodiments of this application are described in detail above. The principle and implementation of this application are described herein through specific examples. Therefore, the content of this specification shall not be construed as a limit to this application as defined in the attached claims.

## Claims

1. A communication system, wherein the communication system comprises a central office, CO, device (100) and a plurality of remote radio heads, RRHs, the plurality of RRHs (200) constitute a ring network by using optical fibers, and the CO device (100) is connected to the ring network by using a first optical fiber and a second optical fiber;
the CO device (100) is configured to: modulate a baseband signal to N first optical carriers that are generated by the CO device (100), to obtain N second optical carriers; and transmit the N second optical carriers to the ring network by using the first optical fiber, so that the N second optical carriers are transmitted in the ring network in a first direction, wherein N is an integer greater than 0, and if N is greater than 1, wavelengths of the N first optical carriers are different; and
any RRH (200) of the plurality of RRHs (200) is configured to: obtain a target optical carrier from received second optical carriers, transmit all the received second optical carriers except the target optical carrier back to the ring network, convert the target optical carrier into an electrical signal, and transmit the electrical signal as a downlink signal,
wherein the communication system further comprises a processing module (300), and the processing module (300) is connected between the CO device (100) and the ring network, and connected to the CO device (100) by using the first optical fiber and the second optical fiber so that the CO device (100) is located outside the ring network; and
the processing module (300) is configured to: when an optical fiber between two adjacent RRHs (200) in the ring network becomes faulty, control the N second optical carriers to be transmitted in the ring network in the first direction and a second direction, the first direction is different from the second direction,
wherein the CO device (100) is further configured to: when the first optical fiber becomes faulty, transmit the N second optical carriers to the ring network via the processing module (300) by using the second optical fiber.

2. The communication system according to claim 1, wherein a wavelength of the target optical carrier obtained by the any RRH (200) is the same as a wavelength of an optical carrier required by the any RRH (200); or the target optical carrier obtained by the any RRH (200) is obtained by the any RRH (200) from the received second optical carriers according to wavelength selection information.

3. The communication system according to claim 1 or 2, wherein any two adjacent RRHs (200) in the plurality of RRHs (200) are connected by using one or two optical fibers.

4. The communication system according to any one of claims 1 to 3, wherein the any RRH (200) is further configured to: obtain a seed optical signal according to the target optical carrier, modulate a received uplink signal to the seed optical signal to obtain a third optical carrier, and transmit the third optical carrier to the CO device (100).

5. The communication system according to any one of claims 1 to 4, wherein the RRHs (200) each comprise: a wavelength selection circuit (21), a signal processing circuit (22), and a transmit/receive circuit (23), wherein
a first port and a second port of the wavelength selection circuit (21) are a first port and a second port of the RRH (200), respectively; a third port and a fourth port of the wavelength selection circuit (21) are connected to a first port and a second port of the signal processing circuit (22), respectively; and a third port of the signal processing circuit (22) is connected to an input/output port of the transmit/receive circuit (23);
the wavelength selection circuit (21) is configured to: obtain the target optical carrier from the second optical carriers that are received from a port 1, and output all the received second optical carriers except the target optical carrier from a port 2, wherein the port 1 is the first port or the second port of the wavelength selection circuit (21), the port 2 is the first port or the second port of the wavelength selection circuit (21), and the port 1 is different from the port 2;
the signal processing circuit (22) is configured to: divide, into a first target optical carrier and a second target optical carrier, optical carriers input from the first port of the signal processing circuit (22); convert the first target optical carrier into an electrical signal; transmit the electrical signal to the transmit/receive circuit (23); erase a baseband signal in the second target optical carrier to obtain a seed optical signal; modulate, to the seed optical signal to obtain a third optical carrier, an uplink signal received by the transmit/receive circuit (23); and output the third optical carrier to the wavelength selection circuit (21) through the second port of the signal processing circuit (22);
the transmit/receive circuit (23) is configured to: transmit the electrical signal obtained by the signal processing circuit (22), and receive the uplink signal; and
the wavelength selection circuit (21) is configured to output the received third optical carrier through the port 1.

6. The communication system according to claim 5, wherein the wavelength selection circuit (21) comprises a second optical circulator (201), a first wavelength selection control module (202), a second wavelength selection control module (203), and a second optical switch (204);
a first port and a third port of the second optical circulator (201) are the first port and the second port of the wavelength selection circuit (21), respectively; a second port and a fourth port of the second optical circulator (201) are connected to a first port and a second port of the second optical switch (204) by using the first wavelength selection control (202) module and the second wavelength selection control module (203), respectively; and a third port and a fourth port of the second optical switch (204) are the third port and the fourth port of the wavelength selection circuit (21), respectively; and
when the second optical carriers are input from the first port of the second optical circulator (201), and output to the first wavelength selection control module (202) through the second port of the second optical circulator (201):
the first wavelength selection control module (202) is configured to: obtain the target optical carrier from the received second optical carriers; output the target optical carrier to the first port of the second optical switch (204); then output the target optical carrier from the third port of the second optical switch (204); output all the received second optical carriers except the target optical carrier to the second port of the second optical circulator (201) for input; and output all the received second optical carriers except the target optical carrier from the third port of the second optical circulator (201); and
the second optical circulator (201) is configured to: output, from the first port of the second optical circulator (201), the third optical carrier that is input from the fourth port or the second port of the second optical switch (204) and that is input to the fourth port of the second optical circulator (201) through the second wavelength selection control module (203); or
when the second optical carriers are input from the third port of the second optical circulator (201), and output to the second wavelength selection control module (203) through the fourth port of the second optical circulator (201):
the second wavelength selection control module (203) is configured to: obtain the target optical carrier from the received second optical carriers; output the target optical carrier to the second port of the second optical switch (204); then output the target optical carrier from the third port of the second optical switch (204); output all the received second optical carriers except the target optical carrier to the fourth port of the second optical circulator (201) for input; and output all the received second optical carriers except the target optical carrier from the first port of the second optical circulator (201); and
the second optical circulator (201) is configured to: output, from the third port of the second optical circulator (201), the third optical carrier that is input from the fourth port and the first port of the second optical switch (204) and that is input to the second port of the second optical circulator (201) through the first wavelength selection control module (202).

7. The communication system according to claim 6, wherein the wavelength selection circuit (21) further comprises a second monitoring module (213), and the second monitoring module (213) is connected to a control port of the second optical switch (204);
the second monitoring module (213) is configured to: detect whether there is an optical signal passing through the second optical switch (204), and control connection and disconnection between ports of the second optical switch (204) according to a detection result; and
if no optical signal has been detected in a case that the first port and the third port of the second optical switch (204) are connected and the second port and the fourth port thereof are connected, control the first port and the fourth port of the second optical switch (204) to be connected and control the second port and the third port thereof to be connected; or
if no optical signal has been detected in a case that the first port and the fourth port of the second optical switch (204) are connected and the second port and the third port thereof are connected, control the first port and the third port of the second optical switch (204) to be connected and control the second port and the fourth port thereof to be connected.

8. The communication system according to claim 6 or 7, wherein the wavelength selection circuit (21) further comprises a configuration module, a first port of the configuration module is connected to the second port of the second optical circulator (201), and a second port of the configuration module is connected to the first wavelength selection control module (202) and the second wavelength selection control module (203); and
the configuration module is configured to: obtain a common optical carrier from optical carriers that are output from the second port of the second optical circulator (201); parse out wavelength selection information from the common optical carrier; and transmit the wavelength selection information to the first wavelength selection control module (202) and the second wavelength selection control module (203), so that the first wavelength selection control module (202) or the second wavelength selection control module (203) can obtain the target optical carrier from the received second optical carriers according to the wavelength selection information.

9. The communication system according to any one of claims 5 to 8, wherein the signal processing circuit (22) comprises: a power division module (205), a reflective semiconductor optical amplifier, RSOA (206), a low-noise amplifier, LNA (208), a photodiode, PD (207), and an optical isolator (210);
an input port of the power division module (205) and a reverse end of the optical isolator (210) are the first port and the second port of the signal processing circuit (22), respectively; a first output port of the power division module (205) is connected to a first port of the RSOA (206); a second output port of the power division module (205) is connected to a first port of the PD (207); a second port of the RSOA (206) is connected to a first port of the LNA (208); a third port of the RSOA (206) is connected to a forward end of the optical isolator (210); and a second port of the LNA (208) and a second port of the PD (207) constitute the third port of the signal processing circuit (22);
the power division module (205) is configured to: divide, into a first target optical carrier and a second target optical carrier, the target optical carrier that is input from the input port of the power division module (205); and output the first target optical carrier and the second target optical carrier to the RSOA (206) and the PD (207) through the first output port and the second output port, respectively;
the PD (207) is configured to: convert the second target optical carrier into an electrical signal, and output the electrical signal from the second port of the PD (207); and
the RSOA (206) is configured to: erase the baseband signal carried in the first target optical carrier, to obtain a seed optical signal; modulate, to the seed optical signal to obtain a third optical carrier, an uplink signal that is input from the second port of the RSOA (206); and output the third optical carrier by using the optical isolator (210), wherein
the uplink signal is transmitted from the second port of the LNA (208) to the second port of the RSOA (206) through the first port of the LNA (208).

10. A central office, CO, device, comprising: a microwave photon generation module (101), a modulation module (102), a multiplexing module (103), a first optical circulator (104), a first optical switch (105), a demultiplexing module (106), and a receiving array (107), wherein
the microwave photon generation module (101) is connected to the multiplexing module (103) by using the modulation module (102), the multiplexing module (103) is connected to a first port of the first optical circulator (104), a second port of the first optical circulator (104) is connected to a first port of the first optical switch (105), a third port of the first optical circulator (104) is connected to the receiving array (107 by using the demultiplexing module (106), and a second port or a third port of the first optical switch (105) is an input/output port of the CO device (100);
the microwave photon generation module (101) is configured to: generate N first optical carriers, and transmit the N first optical carriers to the modulation module (102), wherein N is an integer greater than 0, and if N is greater than 1, wavelengths of the N first optical carriers are different;
the modulation module (102) is configured to: modulate a baseband signal to the N first optical carriers, to obtain N second optical carriers; and transmit the N second optical carriers to the multiplexing module (103), wherein each of the N second optical carriers carries the baseband signal;
the multiplexing module (103) is configured to: converge the N second optical carriers onto one optical path, input the N second optical carriers to the first port of the first optical circulator (104), input the N second optical carriers from the second port of the first optical circulator (104) to the first port of the first optical switch (105), and then output the N second optical carriers through the second port or the third port of the first optical switch (105); and
the demultiplexing module (106) is configured to: demultiplex a third optical carrier, and transmit, to the receiving array (107, an optical carrier obtained after the demultiplexing, wherein the third optical carrier is input through the second port or the third port of the first optical switch (105), passes through the first port of the first optical switch (105), is input from the second port of the first optical circulator (104), and then is output to the demultiplexing module (106) from the third port of the first optical circulator (104),
wherein the CO device (100) further comprises a first monitoring module (108), and the first monitoring module (108) is connected to a control port of the first optical switch (105); and
the first monitoring module (108) is configured to: detect whether there is an optical signal between the first port and the second port of the first optical switch (105) or between the first port and the third port of the first optical switch (105); and
if no optical signal has been detected in a case that the first port and the second port of the first optical switch (105) are connected but the first port and the third port of the first optical switch (105) are disconnected, control the first port and the second port of the first optical switch (105) to be disconnected and control the first port and the third port of the first optical switch (105) to be connected, so that the N second optical carriers are output through the third port of the first optical switch (105); or
if no optical signal has been detected in a case that the first port and the third port of the first optical switch (105) are connected but the first port and the second port of the first optical switch (105) are disconnected, control the first port and the second port of the first optical switch (105) to be connected and control the first port and the third port of the first optical switch (105) to be disconnected, so that the N second optical carriers are output through the second port of the first optical switch (105),
wherein the second port of the first optical switch (105) is connected to one end of a first optical fiber and the third port of the first optical switch (105) is connected to one end of a second optical fiber, and
the CO device (100) is configured to be located outside a ring network constituted by a plurality of remote radio heads, RRHs (200), and by using optical fibers, and is configured to be connected to a processing module (300) by means of the first optical fiber and the second optical fiber.

11. The CO device (100) according to claim 10, wherein the multiplexing module (103) is an arrayed waveguide grating, AWG.

12. The CO device (100) according to claim 10 or 11, wherein the modulation module (102) comprises N modulators, and an i^{th} modulator of the N modulators is configured to: modulate the baseband signal to an i^{th} first optical carrier of the N first optical carriers, to obtain an i^{th} second optical carrier of the N second optical carriers, wherein
i = 1, 2, 3, ..., or N.

## Patentansprüche

1. Kommunikationssystem, wobei das Kommunikationssystem eine Vermittlungsstellenvorrichtung, CO-Vorrichtung, (100) und eine Vielzahl von Remote Radio Heads, RRHs, umfasst, wobei die Vielzahl von RRHs (200) ein Ringnetz unter Verwendung optischer Fasern bildet und die CO-Vorrichtung (100) mit dem Ringnetz unter Verwendung einer ersten optischen Faser und einer zweiten optischen Faser verbunden ist;
die CO-Vorrichtung (100) zu Folgendem konfiguriert ist:
Modulieren eines Basisbandsignals auf N erste optische Träger, die durch die CO-Vorrichtung (100) erzeugt werden, um N zweite optische Träger zu erlangen; und Übertragen der N zweiten optischen Träger an das Ringnetz unter Verwendung der ersten optischen Faser, sodass die N zweiten optischen Träger in dem Ringnetz in einer ersten Richtung übertragen werden, wobei N eine Ganzzahl größer als 0 ist und, wenn N größer als 1 ist, Wellenlängen der N ersten optischen Träger unterschiedlich sind; und
ein beliebiger RRH (200) der Vielzahl von RRHs (200) zu Folgendem konfiguriert ist: Erlangen eines optischen Zielträgers aus empfangenen zweiten optischen Trägern, Übertragen aller der empfangenen zweiten optischen Träger außer dem optischen Zielträger zurück an das Ringnetz, Umwandeln des optischen Zielträgers in ein elektrisches Signal und Übertragen des elektrischen Signals als ein Downlink-Signal,
wobei das Kommunikationssystem ferner ein Verarbeitungsmodul (300) umfasst und das Verarbeitungsmodul (300) zwischen der CO-Vorrichtung (100) und dem Ringnetz verbunden ist und mit der CO-Vorrichtung (100) unter Verwendung der ersten optischen Faser und der zweiten optischen Faser verbunden ist, sodass sich die CO-Vorrichtung (100) außerhalb des Ringnetzes befindet; und das Verarbeitungsmodul (300) zu Folgendem konfiguriert ist: wenn eine optische Faser zwischen zwei benachbarten RRHs (200) in dem Ringnetz ausfällt, Steuern der N zweiten optischen Träger derart, dass sie in dem Ringnetz in der ersten Richtung und in einer zweiten Richtung übertragen werden, wobei sich die erste Richtung von der zweiten Richtung unterscheidet,
wobei die CO-Vorrichtung (100) ferner zu Folgendem konfiguriert ist: wenn die erste optische Faser ausfällt, Übertragen der N zweiten optischen Träger an das Ringnetz über das Verarbeitungsmodul (300) unter Verwendung der zweiten optischen Faser.

2. Kommunikationssystem nach Anspruch 1, wobei eine Wellenlänge des optischen Zielträgers, die durch den beliebigen RRH (200) erlangt wird, mit einer Wellenlänge eines optischen Trägers, die durch den beliebigen RRH (200) benötigt wird, übereinstimmt; oder der optische Zielträger, der durch den beliebigen RRH (200) erlangt wird, durch den beliebigen RRH (200) von den empfangenen zweiten optischen Trägern gemäß Wellenlängenauswahlinformationen erlangt wird.

3. Kommunikationssystem nach Anspruch 1 oder 2, wobei beliebige zwei benachbarte RRHs (200) in der Vielzahl von RRHs (200) unter Verwendung einer oder zwei optischer Fasern verbunden sind.

4. Kommunikationssystem nach einem der Ansprüche 1 bis 3, wobei der beliebige RRH (200) ferner zu Folgendem konfiguriert ist: Erlangen eines optischen Seed-Signals gemäß dem optischen Zielträger, Modulieren eines empfangenen Uplink-Signals auf das optische Seed-Signal, um einen dritten optischen Träger zu erlangen, und Übertragen des dritten optischen Trägers an die CO-Vorrichtung (100).

5. Kommunikationssystem nach einem der Ansprüche 1 bis 4, wobei die RRHs (200) jeweils Folgendes umfassen: eine Wellenlängenauswahlschaltung (21), eine Signalverarbeitungsschaltung (22) und eine Sende-/Empfangsschaltung (23), wobei
ein erster Anschluss und ein zweiter Anschluss der Wellenlängenauswahlschaltung (21) ein erster Anschluss bzw. ein zweiter Anschluss des RRH (200) sind; ein dritter Anschluss und ein vierter Anschluss der Wellenlängenauswahlschaltung (21) mit einem ersten Anschluss bzw. einem zweiten Anschluss der Signalverarbeitungsschaltung (22) verbunden sind; und ein dritter Anschluss der Signalverarbeitungsschaltung (22) mit einem Eingabe-/Ausgabeanschluss der Sende-/Empfangsschaltung (23) verbunden ist;
die Wellenlängenauswahlschaltung (21) zu Folgendem konfiguriert ist: Erlangen des optischen Zielträgers aus den zweiten optischen Trägern, die von einem Anschluss 1 empfangen werden, und Ausgeben aller der empfangenen zweiten optischen Träger außer dem optischen Zielträger von einem Anschluss 2, wobei der Anschluss 1 der erste Anschluss oder der zweite Anschluss der Wellenlängenauswahlschaltung (21) ist, der Anschluss 2 der erste Anschluss oder der zweite Anschluss der Wellenlängenauswahlschaltung (21) ist und der Anschluss 1 sich von dem Anschluss 2 unterscheidet;
die Signalverarbeitungsschaltung (22) zu Folgendem konfiguriert ist: Aufteilen, in einen ersten optischen Zielträger und einen zweiten optischen Zielträger, von optischen Trägern, die von dem ersten Anschluss der Signalverarbeitungsschaltung (22) eingegeben werden; Umwandeln des ersten optischen Zielträgers in ein elektrisches Signal; Übertragen des elektrischen Signals an die Sende-/Empfangsschaltung (23); Löschen eines Basisbandsignals in dem zweiten optischen Zielträger, um ein optisches Seed-Signal zu erlangen; Modulieren, auf das optische Seed-Signal, um einen dritten optischen Träger zu erlangen, eines Uplink-Signals, das durch die Sende-/Empfangsschaltung (23) empfangen wird; und Ausgeben des dritten optischen Trägers an die Wellenlängenauswahlschaltung (21) über den zweiten Anschluss der Signalverarbeitungsschaltung (22);
die Sende-/Empfangsschaltung (23) zu Folgendem konfiguriert ist:
Übertragen des elektrischen Signals, das durch die Signalverarbeitungsschaltung (22) erlangt wird, und Empfangen des Uplink-Signals; und
die Wellenlängenauswahlschaltung (21) dazu konfiguriert ist, den empfangenen dritten optischen Träger über den Anschluss 1 auszugeben.

6. Kommunikationssystem nach Anspruch 5, wobei die Wellenlängenauswahlschaltung (21) einen zweiten optischen Zirkulator (201), ein erstes Wellenlängenauswahlsteuermodul (202), ein zweites Wellenlängenauswahlsteuermodul (203) und einen zweiten optischen Schalter (204) umfasst;
ein erster Anschluss und ein dritter Anschluss des zweiten optischen Zirkulators (201) der erste Anschluss bzw. der zweite Anschluss der Wellenlängenauswahlschaltung (21) sind; ein zweiter Anschluss und ein vierter Anschluss des zweiten optischen Zirkulators (201) mit einem ersten Anschluss bzw. einem zweiten Anschluss des zweiten optischen Schalters (204) unter Verwendung des ersten Wellenlängenauswahlsteuerungsmoduls (202) bzw. des zweiten Wellenlängenauswahlsteuerungsmoduls (203) verbunden sind; und ein dritter Anschluss und ein vierter Anschluss des zweiten optischen Schalters (204) der dritte Anschluss bzw. der vierte Anschluss der Wellenlängenauswahlschaltung (21) sind; und,
wenn die zweiten optischen Träger von dem ersten Anschluss des zweiten optischen Zirkulators (201) eingegeben werden und an das erste Wellenlängenauswahlsteuermodul (202) über den zweiten Anschluss des zweiten optischen Zirkulators (201) ausgegeben werden:
das erste Wellenlängenauswahlsteuermodul (202) zu Folgendem konfiguriert ist: Erlangen des optischen Zielträgers von den empfangenen zweiten optischen Trägern; Ausgeben des optischen Zielträgers an den ersten Anschluss des zweiten optischen Schalters (204); anschließend Ausgeben des optischen Zielträgers von dem dritten Anschluss des zweiten optischen Schalters (204);
Ausgeben aller der empfangenen zweiten optischen Träger außer dem optischen Zielträger an den zweiten Anschluss des zweiten optischen Zirkulators (201) zur Eingabe; und Ausgeben aller der empfangenen zweiten optischen Träger außer dem optischen Zielträger von dem dritten Anschluss des zweiten optischen Zirkulators (201); und
der zweite optische Zirkulator (201) zu Folgendem konfiguriert ist: Ausgeben, von dem ersten Anschluss des zweiten optischen Zirkulators (201), des dritten optischen Trägers, der von dem vierten Anschluss oder dem zweiten Anschluss des zweiten optischen Schalters (204) eingegeben wird und der in den vierten Anschluss des zweiten optischen Zirkulators (201) über das zweite Wellenlängenauswahlsteuermodul (203) eingegeben wird; oder,
wenn die zweiten optischen Träger von dem dritten Anschluss des zweiten optischen Zirkulators (201) eingegeben werden und an das zweite Wellenlängenauswahlsteuermodul (203) über den vierten Anschluss des zweiten optischen Zirkulators (201) ausgegeben werden:
das zweite Wellenlängenauswahlsteuermodul (203) zu Folgendem konfiguriert ist: Erlangen des optischen Zielträgers von den empfangenen zweiten optischen Trägern; Ausgeben des optischen Zielträgers an den zweiten Anschluss des zweiten optischen Schalters (204); anschließend Ausgeben des optischen Zielträgers von dem dritten Anschluss des zweiten optischen Schalters (204);
Ausgeben aller der empfangenen zweiten optischen Träger außer dem optischen Zielträger an den vierten Anschluss des zweiten optischen Zirkulators (201) zur Eingabe; und Ausgeben aller der empfangenen zweiten optischen Träger außer dem optischen Zielträger von dem ersten Anschluss des zweiten optischen Zirkulators (201); und
der zweite optische Zirkulator (201) zu Folgendem konfiguriert ist: Ausgeben, von dem dritten Anschluss des zweiten optischen Zirkulators (201), des dritten optischen Trägers, der von dem vierten Anschluss und dem ersten Anschluss des zweiten optischen Schalters (204) eingegeben wird und der in den zweiten Anschluss des zweiten optischen Zirkulators (201) über das erste Wellenlängenauswahlsteuermodul (202) eingegeben wird.

7. Kommunikationssystem nach Anspruch 6, wobei die Wellenlängenauswahlschaltung (21) ferner ein zweites Überwachungsmodul (213) umfasst und das zweite Überwachungsmodul (213) mit einem Steueranschluss des zweiten optischen Schalters (204) verbunden ist;
das zweite Überwachungsmodul (213) zu Folgendem konfiguriert ist: Erkennen, ob ein optisches Signal den zweiten optischen Schalter (204) durchläuft, und Steuern von Verbindung und Trennung zwischen Anschlüssen des zweiten optischen Schalters (204) gemäß einem Erkennungsergebnis; und,
wenn in einem Fall, in dem der erste Anschluss und der dritte Anschluss des zweiten optischen Schalters (204) verbunden sind und der zweite Anschluss und der vierte Anschluss desselben verbunden sind, kein optisches Signal erkannt wurde, Steuern des ersten Anschlusses und des vierten Anschlusses des zweiten optischen Schalters (204) derart, dass sie verbunden werden, und Steuern des zweiten Anschlusses und des dritten Anschlusses desselben derart, dass sie verbunden werden; oder,
wenn in einem Fall, in dem der erste Anschluss und der vierte Anschluss des zweiten optischen Schalters (204) verbunden sind und der zweite Anschluss und der dritte Anschluss desselben verbunden sind, kein optisches Signal erkannt wurde, Steuern des ersten Anschlusses und des dritten Anschlusses des zweiten optischen Schalters (204) derart, dass sie verbunden werden, und Steuern des zweiten Anschlusses und des vierten Anschlusses desselben derart, dass sie verbunden werden.

8. Kommunikationssystem nach Anspruch 6 oder 7, wobei die Wellenlängenauswahlschaltung (21) ferner ein Konfigurationsmodul umfasst, ein erster Anschluss des Konfigurationsmoduls mit dem zweiten Anschluss des zweiten optischen Zirkulators (201) verbunden ist und ein zweiter Anschluss des Konfigurationsmoduls mit dem ersten Wellenlängenauswahlsteuermodul (202) und dem zweiten Wellenlängenauswahlsteuermodul (203) verbunden ist; und
das Konfigurationsmodul zu Folgendem konfiguriert ist: Erlangen eines gemeinsamen optischen Trägers von optischen Trägern, die von dem zweiten Anschluss des zweiten optischen Zirkulators (201) ausgegeben werden; Parsen von Wellenlängenauswahlinformationen aus dem gemeinsamen optischen Träger; und Übertragen der Wellenlängenauswahlinformationen an das erste Wellenlängenauswahlsteuermodul (202) und das zweite Wellenlängenauswahlsteuermodul (203), sodass das erste Wellenlängenauswahlsteuermodul (202) oder das zweite Wellenlängenauswahlsteuermodul (203) den optischen Zielträger von den empfangenen zweiten optischen Trägern gemäß den Wellenlängenauswahlinformationen erlangen kann.

9. Kommunikationssystem nach einem der Ansprüche 5 bis 8, wobei die Signalverarbeitungsschaltung (22) Folgendes umfasst: ein Leistungsteilungsmodul (205), einen reflektierenden optischen Halbleiterverstärker, RSOA (206), einen rauscharmen Verstärker, LNA (208), eine Fotodiode, PD (207), und einen optischen Isolator (210);
ein Eingabeanschluss des Leistungsteilungsmoduls (205) und ein hinteres Ende des optischen Isolators (210) der erste Anschluss bzw. der zweite Anschluss der Signalverarbeitungsschaltung (22) sind; ein erster Ausgabeanschluss des Leistungsteilungsmoduls (205) mit einem ersten Anschluss des RSOA (206) verbunden ist; ein zweiter Ausgabeanschluss des Leistungsteilungsmoduls (205) mit einem ersten Anschluss der PD (207) verbunden ist; ein zweiter Anschluss des RSOA (206) mit einem ersten Anschluss des LNA (208) verbunden ist; ein dritter Anschluss des RSOA (206) mit einem vorderen Ende des optischen Isolators (210) verbunden ist; und ein zweiter Anschluss des LNA (208) und ein zweiter Anschluss der PD (207) den dritten Anschluss der Signalverarbeitungsschaltung (22) bilden;
das Leistungsteilungsmodul (205) zu Folgendem konfiguriert ist:
Aufteilen, in einen ersten optischen Zielträger und einen zweiten optischen Zielträger, des optischen Zielträgers, der von dem Eingabeanschluss des Leistungsteilungsmoduls (205) eingegeben wird; und Ausgeben des ersten optischen Zielträgers und des zweiten optischen Zielträgers an den RSOA (206) bzw. die PD (207) durch den ersten Ausgabeanschluss bzw. den zweiten Ausgabeanschluss;
die PD (207) zu Folgendem konfiguriert ist: Umwandeln des zweiten optischen Zielträgers in ein elektrisches Signal und Ausgeben des elektrischen Signals von dem zweiten Anschluss der PD (207); und
der RSOA (206) zu Folgendem konfiguriert ist: Löschen des Basisbandsignals, das in dem ersten optischen Zielträger enthalten ist, um ein optisches Seed-Signal zu erlangen; Modulieren, auf das optische Seed-Signal, um einen dritten optischen Träger zu erlangen, eines Uplink-Signals, das von dem zweiten Anschluss des RSOA (206) eingegeben wird; und Ausgeben des dritten optischen Trägers unter Verwendung des optischen Isolators (210), wobei
das Uplink-Signal von dem zweiten Anschluss des LNA (208) an den zweiten Anschluss des RSOA (206) über den ersten Anschluss des LNA (208) übertragen wird.

10. Vermittlungsstellenvorrichtung, CO-Vorrichtung, umfassend:
ein Mikrowellen-Photonen-Erzeugungsmodul (101), ein Modulationsmodul (102), ein Multiplexing-Modul (103), einen ersten optischen Zirkulator (104), einen ersten optischen Schalter (105), ein Demultiplexing-Modul (106) und eine Empfangsbaugruppe (107), wobei
das Mikrowellen-Photonen-Erzeugungsmodul (101) mit dem Multiplexing-Modul (103) unter Verwendung des Modulationsmoduls (102) verbunden ist, das Multiplexing-Modul (103) mit einem ersten Anschluss des ersten optischen Zirkulators (104) verbunden ist, ein zweiter Anschluss des ersten optischen Zirkulators (104) mit einem ersten Anschluss des ersten optischen Schalters (105) verbunden ist, ein dritter Anschluss des ersten optischen Zirkulators (104) mit der Empfangsbaugruppe (107) unter Verwendung des Demultiplexing-Moduls (106) verbunden ist und ein zweiter Anschluss oder ein dritter Anschluss des ersten optischen Schalters (105) ein Eingabe-/Ausgabeanschluss der CO-Vorrichtung (100) ist;
das Mikrowellen-Photonen-Erzeugungsmodul (101) zu Folgendem konfiguriert ist: Erzeugen N erster optischer Träger und Übertragen der N ersten optischen Träger an das Modulationsmodul (102), wobei N eine Ganzzahl größer als 0 ist und, wenn N größer als 1 ist, Wellenlängen der N ersten optischen Träger unterschiedlich sind;
das Modulationsmodul (102) zu Folgendem konfiguriert ist:
Modulieren eines Basisbandsignals auf die N ersten optischen Träger, um N zweite optische Träger zu erlangen; und Übertragen der N zweiten optischen Träger an das Multiplexing-Modul (103), wobei jeder der N zweiten optischen Träger das Basisbandsignal trägt;
das Multiplexing-Modul (103) zu Folgendem konfiguriert ist: Konvergieren der N zweiten optischen Träger auf einen optischen Pfad, Eingeben der N zweiten optischen Träger in den ersten Anschluss des ersten optischen Zirkulators (104), Eingeben der N zweiten optischen Träger von dem zweiten Anschluss des ersten optischen Zirkulators (104) in den ersten Anschluss des ersten optischen Schalters (105) und anschließend Ausgeben der N zweiten optischen Träger durch den zweiten Anschluss oder den dritten Anschluss des ersten optischen Schalters (105); und
das Demultiplexing-Modul (106) zu Folgendem konfiguriert ist: Demultiplexen eines dritten optischen Trägers und Übertragen, an die Empfangsbaugruppe (107), eines optischen Trägers, der nach dem Demultiplexen erlangt wird, wobei der dritte optische Träger durch den zweiten Anschluss oder den dritten Anschluss des ersten optischen Schalters (105) eingegeben wird, den ersten Anschluss des ersten optischen Schalters (105) durchläuft, von dem zweiten Anschluss des ersten optischen Zirkulators (104) eingegeben wird und anschließend an das Demultiplexing-Modul (106) von dem dritten Anschluss des ersten optischen Zirkulators (104) ausgegeben wird,
wobei die CO-Vorrichtung (100) ferner ein erstes Überwachungsmodul (108) umfasst und das erste Überwachungsmodul (108) mit einem Steueranschluss des ersten optischen Schalters (105) verbunden ist; und
das erste Überwachungsmodul (108) zu Folgendem konfiguriert ist: Erkennen, ob ein optisches Signal zwischen dem ersten Anschluss und dem zweiten Anschluss des ersten optischen Schalters (105) oder zwischen dem ersten Anschluss und dem dritten Anschluss des ersten optischen Schalters (105) vorhanden ist; und,
wenn in einem Fall, in dem der erste Anschluss und der zweite Anschluss des ersten optischen Schalters (105) verbunden sind, aber der erste Anschluss und der dritte Anschluss des ersten optischen Schalters (105) getrennt sind, kein optisches Signal erkannt wurde, Steuern des ersten Anschlusses und des zweiten Anschlusses des ersten optischen Schalters (105) derart, dass sie getrennt werden, und Steuern des ersten Anschlusses und des dritten Anschlusses des ersten optischen Schalters (105) derart, dass sie verbunden werden, sodass die N zweiten optischen Träger durch den dritten Anschluss des ersten optischen Schalters (105) ausgegeben werden; oder,
wenn in einem Fall, in dem der erste Anschluss und der dritte Anschluss des ersten optischen Schalters (105) verbunden sind, aber der erste Anschluss und der zweite Anschluss des ersten optischen Schalters (105) getrennt sind, kein optisches Signal erkannt wurde, Steuern des ersten Anschlusses und des zweiten Anschlusses des ersten optischen Schalters (105) derart, dass sie verbunden werden, und Steuern des ersten Anschlusses und des dritten Anschlusses des ersten optischen Schalters (105) derart, dass sie getrennt werden, sodass die N zweiten optischen Träger durch den zweiten Anschluss des ersten optischen Schalters (105) ausgegeben werden,
wobei der zweite Anschluss des ersten optischen Schalters (105) mit einem Ende einer ersten optischen Faser verbunden ist und der dritte Anschluss des ersten optischen Schalters (105) mit einem Ende einer zweiten optischen Faser verbunden ist, und die CO-Vorrichtung (100) dazu konfiguriert ist, sich außerhalb eines Ringnetzes zu befinden, das aus einer Vielzahl von Remote Radio Heads, RRHs (200), und unter Verwendung von optischen Fasern gebildet ist, und dazu konfiguriert ist, mit einem Verarbeitungsmodul (300) mittels der ersten optischen Faser und der zweiten optischen Faser verbunden zu werden.

11. CO-Vorrichtung (100) nach Anspruch 10, wobei das Multiplexing-Modul (103) ein Arrayed Waveguide Grating, AWG, ist.

12. CO-Vorrichtung (100) nach Anspruch 10 oder 11, wobei das Modulationsmodul (102) N Modulatoren umfasst und ein i-ter Modulator der N Modulatoren zu Folgendem konfiguriert ist:
Modulieren des Basisbandsignals auf einen i-ten ersten optischen Träger der N ersten optischen Träger, um einen i-ten zweiten optischen Träger der N zweiten optischen Träger zu erlangen, wobei
i = 1, 2, 3, ..., oder N.

## Revendications

1. Système de communication, dans lequel le système de communication comprend un dispositif de bureau central, CO, (100) et une pluralité de têtes radio distantes, RRH, la pluralité de RRH (200) constituent un réseau en anneau à l'aide de fibres optiques, et le dispositif CO (100) est connecté au réseau en anneau à l'aide d'une première fibre optique et d'une seconde fibre optique ;
le dispositif CO (100) est configuré pour : moduler un signal de bande de base en N premières porteuses optiques qui sont générées par le dispositif CO (100), pour obtenir N deuxièmes porteuses optiques ; et transmettre les N deuxièmes porteuses optiques au réseau en anneau à l'aide de la première fibre optique, de sorte que les N deuxièmes porteuses optiques soient transmises dans le réseau en anneau dans une première direction, dans lequel N est un entier supérieur à 0, et si N est supérieur à 1, les longueurs d'onde des N premières porteuses optiques sont différentes ; et
une quelconque RRH (200) de la pluralité de RRH (200) est configurée pour : obtenir une porteuse optique cible à partir de deuxièmes porteuses optiques reçues, transmettre toutes les deuxièmes porteuses optiques reçues à l'exception de la porteuse optique cible au réseau en anneau, convertir la porteuse optique cible en un signal électrique, et transmettre le signal électrique en tant que signal de liaison descendante,
dans lequel le système de communication comprend également un module de traitement (300), et le module de traitement (300) est connecté entre le dispositif CO (100) et le réseau en anneau, et connecté au dispositif CO (100) à l'aide de la première fibre optique et de la seconde fibre optique de sorte que le dispositif CO (100) est situé à l'extérieur du réseau en anneau ; et
le module de traitement (300) est configuré pour : lorsqu'une fibre optique entre deux RRH (200) adjacentes dans le réseau en anneau devient défectueuse, commander les N deuxièmes porteuses optiques à transmettre dans le réseau en anneau dans la première direction et dans une seconde direction, la première direction est différente de la seconde direction,
dans lequel le dispositif CO (100) est également configuré pour : lorsque la première fibre optique devient défectueuse, transmettre les N deuxièmes porteuses optiques au réseau en anneau via le module de traitement (300) à l'aide de la seconde fibre optique.

2. Système de communication selon la revendication 1, dans lequel une longueur d'onde de la porteuse optique cible obtenue par la quelconque RRH (200) est la même qu'une longueur d'onde d'une porteuse optique requise par la quelconque RRH (200) ; ou la porteuse optique cible obtenue par la quelconque RRH (200) est obtenue par la quelconque RRH (200) à partir des deuxièmes porteuses optiques reçues selon les informations de sélection de longueur d'onde.

3. Système de communication selon la revendication 1 ou 2, dans lequel deux RRH (200) adjacentes quelconques dans la pluralité de RRH (200) sont connectées à l'aide d'une ou deux fibres optiques.

4. Système de communication selon l'une quelconque des revendications 1 à 3, dans lequel la quelconque RRH (200) est également configurée pour : obtenir un signal optique d'amorçage selon la porteuse optique cible, moduler un signal de liaison montante reçu en signal optique d'amorçage pour obtenir une troisième porteuse optique, et transmettre la troisième porteuse optique au dispositif CO (100).

5. Système de communication selon l'une quelconque des revendications 1 à 4, dans lequel les RRH (200) comprennent chacune : un circuit de sélection de longueur d'onde (21), un circuit de traitement de signal (22) et un circuit d'émission/réception (23), dans lequel
un premier port et un deuxième port du circuit de sélection de longueur d'onde (21) sont respectivement un premier port et un deuxième port de la RRH (200) ; un troisième port et un quatrième port du circuit de sélection de longueur d'onde (21) sont respectivement connectés à un premier port et à un deuxième port du circuit de traitement de signal (22) ; et un troisième port du circuit de traitement de signal (22) est connecté à un port d'entrée/sortie du circuit d'émission/réception (23) ;
le circuit de sélection de longueur d'onde (21) est configuré pour : obtenir la porteuse optique cible à partir des deuxièmes porteuses optiques qui sont reçues en provenance d'un port 1, et délivrer en sortie toutes les deuxièmes porteuses optiques reçues à l'exception de la porteuse optique cible en provenance d'un port 2, dans lequel le port 1 est le premier port ou le deuxième port du circuit de sélection de longueur d'onde (21), le port 2 est le premier port ou le deuxième port du circuit de sélection de longueur d'onde (21), et le port 1 est différent du port 2 ;
le circuit de traitement de signal (22) est configuré pour :
diviser, en une première porteuse optique cible et une deuxième porteuse optique cible, les porteuses optiques entrées depuis le premier port du circuit de traitement de signal (22) ; convertir la première porteuse optique cible en un signal électrique ; transmettre le signal électrique au circuit d'émission/réception (23) ; effacer un signal de bande de base dans la deuxième porteuse optique cible pour obtenir un signal optique d'amorçage ; moduler, en signal optique d'amorçage pour obtenir une troisième porteuse optique, un signal de liaison montante reçu par le circuit d'émission/réception (23) ; et délivrer en sortie la troisième porteuse optique au circuit de sélection de longueur d'onde (21) via le deuxième port du circuit de traitement de signal (22) ;
le circuit d'émission/réception (23) est configuré pour : transmettre le signal électrique obtenu par le circuit de traitement de signal (22), et recevoir le signal de liaison montante ; et
le circuit de sélection de longueur d'onde (21) est configuré pour délivrer en sortie la troisième porteuse optique reçue via le port 1.

6. Système de communication selon la revendication 5, dans lequel le circuit de sélection de longueur d'onde (21) comprend un second circulateur optique (201), un premier module de commande de sélection de longueur d'onde (202), un second module de commande de sélection de longueur d'onde (203), et un second commutateur optique (204) ;
le premier port et un troisième port du second circulateur optique (201) sont respectivement le premier port et le deuxième port du circuit de sélection de longueur d'onde (21) ; un deuxième port et un quatrième port du second circulateur optique (201) sont connectés respectivement à un premier port et à un deuxième port du second commutateur optique (204) à l'aide du premier module de commande de sélection de longueur d'onde (202) et du second module de commande de sélection de longueur d'onde (203) ; et un troisième port et un quatrième port du second commutateur optique (204) sont respectivement le troisième port et le quatrième port du circuit de sélection de longueur d'onde (21) ; et
lorsque les deuxièmes porteuses optiques sont entrées depuis le premier port du second circulateur optique (201) et délivrées en sortie au premier module de commande de sélection de longueur d'onde (202) via le deuxième port du second circulateur optique (201) :
le premier module de commande de sélection de longueur d'onde (202) est configuré pour : obtenir la porteuse optique cible à partir des deuxièmes porteuses optiques reçues ; délivrer en sortie la porteuse optique cible au premier port du second commutateur optique (204) ; puis délivrer en sortie la porteuse optique cible depuis le troisième port du second commutateur optique (204) ; délivrer en sortie toutes les deuxièmes porteuses optiques reçues à l'exception de la porteuse optique cible au deuxième port du second circulateur optique (201) pour entrée ; et délivrer en sortie toutes les deuxièmes porteuses optiques reçues à l'exception de la porteuse optique cible depuis le troisième port du second circulateur optique (201) ; et
le second circulateur optique (201) est configuré pour : délivrer en sortie, depuis le premier port du second circulateur optique (201), la troisième porteuse optique qui est entrée depuis le quatrième port ou le deuxième port du second commutateur optique (204) et qui est entrée au quatrième port du second circulateur optique (201) via le second module de commande de sélection de longueur d'onde (203) ; ou
lorsque les deuxièmes porteuses optiques sont entrées depuis le troisième port du second circulateur optique (201) et délivrées en sortie au second module de commande de sélection de longueur d'onde (203) via le quatrième port du second circulateur optique (201) :
le second module de commande de sélection de longueur d'onde (203) est configuré pour : obtenir la porteuse optique cible à partir des deuxièmes porteuses optiques reçues ; délivrer en sortie la porteuse optique cible au deuxième port du second commutateur optique (204) ; puis délivrer en sortie la porteuse optique cible depuis le troisième port du second commutateur optique (204) ; délivrer en sortie toutes les deuxièmes porteuses optiques reçues à l'exception de la porteuse optique cible au quatrième port du second circulateur optique (201) pour entrée ; et délivrer en sortie toutes les deuxièmes porteuses optiques reçues à l'exception de la porteuse optique cible depuis le premier port du second circulateur optique (201) ; et
le second circulateur optique (201) est configuré pour : délivrer en sortie, depuis le troisième port du second circulateur optique (201), la troisième porteuse optique qui est entrée depuis le quatrième port et le premier port du second commutateur optique (204) et qui est entrée au deuxième port du second circulateur optique (201) via le premier module de commande de sélection de longueur d'onde (202).

7. Système de communication selon la revendication 6, dans lequel le circuit de sélection de longueur d'onde (21) comprend également un second module de surveillance (213), et le second module de surveillance (213) est connecté à un port de commande du second commutateur optique (204) ;
le second module de surveillance (213) est configuré pour :
détecter s'il existe un signal optique qui traverse le second commutateur optique (204), et commander la connexion et la déconnexion entre les ports du second commutateur optique (204) selon un résultat de détection ; et
si aucun signal optique n'a été détecté lorsque le premier port et le troisième port du second commutateur optique (204) sont connectés et que le deuxième port et le quatrième port de celui-ci sont connectés, commander le premier port et le quatrième port du second commutateur optique (204) pour qu'ils soient connectés et commander le deuxième port et le troisième port de celui-ci pour qu'ils soient connectés ; ou
si aucun signal optique n'a été détecté lorsque le premier port et le quatrième port du second commutateur optique (204) sont connectés et que le deuxième port et le troisième port de celui-ci sont connectés, commander le premier port et le troisième port du second commutateur optique (204) pour qu'ils soient connectés et commander le deuxième port et le quatrième port de celui-ci pour qu'ils soient connectés.

8. Système de communication selon la revendication 6 ou 7, dans lequel le circuit de sélection de longueur d'onde (21) comprend également un module de configuration, un premier port du module de configuration est connecté au deuxième port du second circulateur optique (201), et un deuxième port du module de configuration est connecté au premier module de commande de sélection de longueur d'onde (202) et au second module de commande de sélection de longueur d'onde (203) ; et
le module de configuration est configuré pour : obtenir une porteuse optique commune à partir des porteuses optiques qui sont délivrées en sortie depuis le deuxième port du second circulateur optique (201) ; analyser les informations de sélection de longueur d'onde à partir de la porteuse optique commune ; et transmettre les informations de sélection de longueur d'onde au premier module de commande de sélection de longueur d'onde (202) et au second module de commande de sélection de longueur d'onde (203), de sorte que le premier module de commande de sélection de longueur d'onde (202) ou que le second module de commande de sélection de longueur d'onde (203) puisse obtenir la porteuse optique cible à partir des deuxièmes porteuses optiques reçues selon les informations de sélection de longueur d'onde.

9. Système de communication selon l'une quelconque des revendications 5 à 8, dans lequel le circuit de traitement de signal (22) comprend : un module de division de puissance (205), un amplificateur optique à semi-conducteur réflectif, RSOA (206), un amplificateur à faible bruit, LNA (208), une photodiode, PD (207), et un isolateur optique (210) ;
un port d'entrée du module de division de puissance (205) et une extrémité inverse de l'isolateur optique (210) sont respectivement le premier port et le deuxième port du circuit de traitement de signal (22) ; un premier port de sortie du module de division de puissance (205) est connecté à un premier port du RSOA (206) ; un deuxième port de sortie du module de division de puissance (205) est connecté à un premier port de la PD (207) ; un deuxième port du RSOA (206) est connecté à un premier port du LNA (208) ; un troisième port du RSOA (206) est connecté à une extrémité avant de l'isolateur optique (210) ; et un deuxième port du LNA (208) et un deuxième port de la PD (207) constituent le troisième port du circuit de traitement de signal (22) ;
le module de division de puissance (205) est configuré pour :
diviser, en une première porteuse optique cible et une deuxième porteuse optique cible, la porteuse optique cible qui est entrée depuis le port d'entrée du module de division de puissance (205) ; et délivrer en sortie, respectivement, la première porteuse optique cible et la deuxième porteuse optique cible au RSOA (206) et à la PD (207) via le premier port de sortie et le deuxième port de sortie ;
la PD (207) est configurée pour : convertir la deuxième porteuse optique cible en un signal électrique, et délivrer en sortie le signal électrique depuis le deuxième port de la PD (207) ; et
le RSOA (206) est configuré pour : effacer le signal de bande de base transporté dans la première porteuse optique cible, pour obtenir un signal optique d'amorçage ; moduler, en signal optique d'amorçage pour obtenir une troisième porteuse optique, un signal de liaison montante qui est entré depuis le deuxième port du RSOA (206) ; et délivrer en sortie la troisième porteuse optique à l'aide de l'isolateur optique (210), dans lequel le signal de liaison montante est transmis du deuxième port du LNA (208) au deuxième port du RSOA (206) via le premier port du LNA (208).

10. Dispositif de bureau central, CO, comprenant : un module de génération de photons micro-ondes (101), un module de modulation (102), un module de multiplexage (103), un premier circulateur optique (104), un premier commutateur optique (105), un module de démultiplexage (106) et un réseau de réception (107), dans lequel
le module de génération de photons micro-ondes (101) est connecté au module de multiplexage (103) à l'aide du module de modulation (102), le module de multiplexage (103) est connecté à un premier port du premier circulateur optique (104), un deuxième port du premier circulateur optique (104) est connecté à un premier port du premier commutateur optique (105), un troisième port du premier circulateur optique (104) est connecté au réseau de réception (107) à l'aide du module de démultiplexage (106), et un deuxième port ou un troisième port du premier commutateur optique (105) est un port d'entrée/sortie du dispositif CO (100) ;
le module de génération de photons micro-ondes (101) est configuré pour : générer N premières porteuses optiques et transmettre les N premières porteuses optiques au module de modulation (102), dans lequel N est un entier supérieur à 0, et si N est supérieur à 1, les longueurs d'onde des N premières porteuses optiques sont différentes ;
le module de modulation (102) est configuré pour : moduler un signal de bande de base en N premières porteuses optiques, pour obtenir N deuxièmes porteuses optiques ; et transmettre les N deuxièmes porteuses optiques au module de multiplexage (103), dans lequel chacune des N deuxièmes porteuses optiques transporte le signal de bande de base ;
le module de multiplexage (103) est configuré pour : faire converger les N deuxièmes porteuses optiques sur un seul chemin optique, entrer les N deuxièmes porteuses optiques au premier port du premier circulateur optique (104), entrer les N deuxièmes porteuses optiques du deuxième port du premier circulateur optique (104) dans le premier port du premier commutateur optique (105), puis délivrer en sortie les N deuxièmes porteuses optiques via le deuxième port ou le troisième port du premier commutateur optique (105) ; et
le module de démultiplexage (106) est configuré pour :
démultiplexer une troisième porteuse optique et transmettre, au réseau de réception (107), une porteuse optique obtenue après le démultiplexage, dans lequel la troisième porteuse optique est entrée via le deuxième port ou le troisième port du premier commutateur optique (105), traverse le premier port du premier commutateur optique (105), est entrée depuis le deuxième port du premier circulateur optique (104), puis est délivrée en sortie au module de démultiplexage (106) depuis le troisième port du premier circulateur optique (104),
dans lequel le dispositif CO (100) comprend également un premier module de surveillance (108), et le premier module de surveillance (108) est connecté à un port de commande du premier commutateur optique (105) ; et
le premier module de surveillance (108) est configuré pour : détecter s'il existe un signal optique entre le premier port et le deuxième port du premier commutateur optique (105) ou entre le premier port et le troisième port du premier commutateur optique (105) ; et
si aucun signal optique n'a été détecté lorsque le premier port et le deuxième port du premier commutateur optique (105) sont connectés mais que le premier port et le troisième port du premier commutateur optique (105) sont déconnectés, commander le premier port et le deuxième port du premier commutateur optique (105) pour qu'il soient déconnectés et commander le premier port et le troisième port du premier commutateur optique (105) pour qu'il soient connectés, de sorte que les N deuxièmes porteuses optiques soient délivrées en sortie via le troisième port du premier commutateur optique (105) ; ou
si aucun signal optique n'a été détecté lorsque le premier port et le troisième port du premier commutateur optique (105) sont connectés mais que le premier port et le deuxième port du premier commutateur optique (105) sont déconnectés, commander le premier port et le deuxième port du premier commutateur optique (105) pour qu'il soient connectés et commander le premier port et le troisième port du premier commutateur optique (105) pour qu'il soient déconnectés, de sorte que les N deuxièmes porteuses optiques soient délivrées en sortie via le deuxième port du premier commutateur optique (105),
dans lequel le deuxième port du premier commutateur optique (105) est connecté à une extrémité d'une première fibre optique et le troisième port du premier commutateur optique (105) est connecté à une extrémité d'une seconde fibre optique, et
le dispositif CO (100) est configuré pour être situé à l'extérieur d'un réseau en anneau constitué d'une pluralité de têtes radio distantes, RRH (200), et à l'aide de fibres optiques, et est configuré pour être connecté à un module de traitement (300) au moyen de la première fibre optique et de la seconde fibre optique.

11. Dispositif CO (100) selon la revendication 10, dans lequel le module de multiplexage (103) est un réseau sélectif planaire, AWG.

12. Dispositif CO (100) selon la revendication 10 ou 11, dans lequel le module de modulation (102) comprend N modulateurs, et un i^{-ème} modulateur des N modulateurs est configuré pour :
moduler le signal de bande de base en une i^{-ème} première porteuse optique des N premières porteuses optiques, pour obtenir une i^{- ème} deuxième porteuse optique des N deuxièmes porteuses optiques,
dans lequel
i = 1, 2, 3, ..., ou N.
